# EUROPÄISCHE PATENTSCHRIFT

(11) **EP 4 116 146 B1**
(45) Veröffentlichungstag und Bekanntmachung des Hinweises auf die Patenterteilung: **03.04.2024**
(21) Anmeldenummer: 22183505.1
(22) Anmeldetag: 07.07.2022
(51) Int. Cl.: B60P 1/44

(54) **SYSTEM ZUM SICHEREN BEDIENEN VON HUBLADEBÜHNEN**
SYSTEM FOR SECURELY OPERATING RAISING PLATFORMS
SYSTÈME DE COMMANDE SÉCURISÉE DE PLATEFORMES ÉLÉVATRICES

(30) Priorität: 08.07.2021 EP 21184410
(43) Veröffentlichungstag der Anmeldung: 11.01.2023
(73) Patentinhaber: Schmidiger GmbH, 6125 Menzberg (CH)
(72) Erfinder: KUGLER, Fabian, 6247 Schötz (CH); STÖCKLI, Urs, 6122 Menznau (CH); SCHMIDIGER, Stefanie, 6102 Malters (CH); SCHMIDIGER, Willi, 6125 Menzberg (CH)
(74) Vertreter: Koelliker, Robert

(56) Entgegenhaltungen:
- DE-A1-102019 117 454
- GB-A- 2 383 575
- JP-A- 2001 163 595
- US-A1- 2009 271 077

## Beschreibung

Die vorliegende Erfindung bezieht sich auf ein System zum sicheren Bedienen von Hubladebühnen von LKWs mit einer Multi-Zonen-Lokalisierung und gegebenenfalls einem Sensorpaket, ein Verfahren zum sicheren Bedienen der Hubladebühnen, sowie der Verwendung der Hubladebühnen.

LKWs und deren Anhänger weisen oft einen abschliessbaren Kofferaufbau auf, in welchem Frachtgut - durch den Kofferaufbau von Umwelteinflüssen geschützt - transportiert werden kann. Zum Be- und Entladen des Frachtguts haben sich Hubladebühnen, auch Ladebordwand oder Hebebühne genannt, durchgesetzt. Diese werden am Heck des LKWs, resp. des LKW-Anhängers am Rahmen bzw. an der Hecktraverse, angebracht und umfassen in aller Regel eine Plattform, deren Position mittels Hub- und Neigezylindern bewegt werden kann, ein Hydrauliksystem sowie eine Steuerelektrik mit Bedieneinheit, mit welcher die Lage der Plattform gezielt verändert werden kann.

Die Steuerelektrik resp. Steuerelektronik bewegt mittels Hydrauliksystem resp. Hub- und Neigezylinder die Plattform in je zwei unterschiedliche Richtungen, d.h. mit und gegen die Schwerkraft. Die Vertikalbewegung mittels Hubzylinder erlaubt das Heben und Senken der geöffneten und typischerweise horizontal angeordneten Plattform vom Umschlagplatz, beispielsweise auf Strassenniveau, bis zur Ladekante des Kofferaufbaus, wodurch auch schwere Güter auf einfache Art und Weise von der Ladefläche des LKW auf ein darunter liegendes Niveau - und wieder zurück - gebracht werden können. Die Neigebewegung ermöglicht das Öffnen und Schliessen des Kofferaufbaus mit der Plattform. Beim Schliessen der Plattform wird diese von der geöffneten, horizontal angeordneten Position des Ladeflächen-Niveaus nach oben bis zur vertikalen Position aufgeneigt, wodurch die Plattform die LKW-Hinterseite des Kofferaufbaus verschliesst. Analoges gilt für das Öffnen der Plattform in umgekehrter Richtung. Zudem erlaubt die Neigebewegung das leichte, reversible Abneigen der Plattform von der horizontalen in eine leicht abfallende Position, beispielsweise für die Bodenabsenkung, bis die Plattformspitze den Boden berührt, damit die Plattform mit einem Paletthubwagen hindernisfrei be- und entladen werden kann.

Zur Steuerung der Hubladebühne, und somit der Plattform, hat sich in den letzten Jahren die mobile Fernbedienung durchgesetzt. Diese weist gegenüber der herkömmlichen, fest installierten Bedieneinheit, welche auf einer Seite im hinteren Bereich des Fahrzeugs montiert wird, deutliche Vorteile auf. So kann der LKW-Fahrer die mobile Fernbedienung stets auf sich tragen und die Plattform auch von einem gewissen Abstand bedienen, oder er kann die Plattform bedienen, während er sich mit dem Ladegut auf der Plattform befindet, wodurch er deutlich Zeit spart. Im Vergleich zu kabelgebundenen Fernbedienungen hat ein Bediener, der eine kabellose Fernbedienung stets auf sich trägt, eine viel höhere Bewegungsfreiheit, sodass er seine Arbeit komfortabler und flüssiger verrichten kann.

Nachteilig an der mobilen Fernbedienung ist das erhöhte Risikopotential für Unfälle in gewissen Situationen für den Bediener der Fernbedienung, d.h. in der Regel der LKW-Fahrer, und die nahe Umgebung der bewegten Plattform. Aufgrund von Zeit- und Kostendruck sowie Unachtsamkeit werden allein in der Schweiz jährlich hunderte an Unfällen im Zusammenhang mit der LKW-Hubladebühne mit direkten Kosten im zweistelligen Millionenbereich registriert. Leider mussten sogar einzelne Todesopfer beklagt werden, wo die Unfallursache in direktem Zusammenhang mit einer mobilen Fernbedienung stand. Als Unfallursachen mit mobilen Fernbedienungen sind u.a. folgende Gründe bekannt:
- Der Bediener ist zu nahe an der Plattform, wenn diese sich bewegt;
- Die Plattform wird aus zu grosser Distanz bedient, wo der Bediener keine Übersicht über die Gefahrenzone hat;
- Frachtgut fällt von der Plattform, wenn diese unsachgemäss oder unbeabsichtigt bedient wird;
- Die Last auf der Plattform ist zu hoch oder zu weit aussen an der Plattformkante, sodass Plattform und Ladung beim Bewegen in Schwingung geraten;
- Der Bediener klemmt aus Unachtsamkeit beim Schliessen ein Körperteil, beispielsweise einen Arm, ein;
- Die Plattform wird unbeabsichtigt während der Fahrt bewegt, weil die Fernbedienung eingeschaltet in der Hosentasche verstaut war;
- Die Neigegeschwindigkeit und der max. mögliche Neigungswinkel der Plattform sind nicht begrenzt oder zu hoch, wenn sich auf der Plattform eine Person und eine Ladung befindet, sodass diese umkippt oder herunterfällt; und/oder
- Es werden herkömmliche Fernbedienungen eingesetzt, die für den Betrieb einer Hubladebühne ungeeignet sind oder die ungenügend in das Gesamtsystem integriert sind.

Die DE-A-10 2019 117 454 offenbart eine Vorrichtung zur Erhöhung der Betriebssicherheit einer Hubladebühne für ein Fahrzeug, wobei die Vorrichtung wenigstens eine Erfassungseinrichtung umfasst, die ausgebildet ist, ein Signal von einer Bedieneinrichtung für die Hubladbühne insbesondere drahtlos zu erfassen, wobei die Vorrichtung eine Ansteuereinrichtung, eine Bedieneinheit und eine Recheneinrichtung umfasst, welche die Hubladebühne abhängig vom Signal der Bedieneinrichtung ansteuern und eine Position für die Bedieneinrichtung bestimmen können. Die Vorrichtung kann einen zur Bedienung der Hubladebühne freigegeben Raum bestimmen, wobei der Raum wenigstens einen Teil eines Arbeitsbereichs der Hubladebühne umgibt oder umfasst, wobei der Raum auf Positionen begrenzt ist, für die zumindest im Betrieb der Hubladebühne eine Sichtlinie auf wenigstens einen Teil des Arbeitsbereichs möglich ist. Die Recheneinrichtung kann eine Ansteuerung durch die Ansteuereinrichtung freigeben, wenn festgestellt wird, dass die Position für die Bedieneinrichtung im freigegebenen Raum liegt, oder eine Ansteuerung durch die Ansteuereinrichtung unterbinden, wenn festgestellt wird, dass die Position für die Bedieneinrichtung außerhalb des freigegebenen Raums liegt. Die Position der Bedieneinrichtung wird abhängig von einer Signalstärke oder einer Signallaufzeit des Signals bestimmt. Anstelle der Triangulation kann auch eine Lokalisierung der Bedieneinrichtung mit nur zwei Erfassungseinrichtungen vorgesehen sein. Diese Lokalisierung erfordert weniger Erfassungseinrichtungen ist jedoch nicht eindeutig. Um sicher zu stellen, dass sich die Bedieneinrichtung in einem halbreisförmigen Areal befindet, wird eine zusätzlichen mathematischen Berechnung durchgeführt. Damit wird auch die Position der Bedieneinrichtung bestimmt. Dazu werden die beiden Erfassungseinrichtungen mit in Richtung einer Längsachse des Fahrzeugs unterschiedlichen Abstands angeordnet. Alternativ wird die Position mittels Triangulation mit wenigstens drei Erfassungseinrichtungen, d.h. Antennen, bestimmt. Wird die Position der Bedieneinrichtung abhängig von einer Signalstärke oder einer Signallaufzeit des Signals und nur mit einer Erfassungseinrichtung bestimmt, kann lediglich der Abstand der Bedieneinheit zur Erfassungseinrichtung bestimmt werden, nicht aber die exakte Position der Bedieneinheit. Auch mittels Bestimmung der Position der Erfassungseinrichtung mittels zwei Erfassungseinrichtungen und mathematischer Berechnung, oder mittels drei Erfassungseinrichtungen und Triangulation, werden lediglich 2 Bereiche bestimmt, d.h. des freigegebenen und des nicht freigegebenen Raums. Dies ist für den Bediener - und auch für die Arbeitssicherheit - oft äusserst ungenügend und schränkt ihn in seiner Arbeit stark ein.

Es ist somit die Aufgabe der Erfindung ein System bereitzustellen, mit welchem die Positionen des Bedieners möglichst genau bestimmt werden und in Abhängigkeit von dessen Position dem Bediener mindestens drei unterschiedliche Bewegungsberechtigungen erteilt werden können. Zudem soll das Unfallrisiko deutlich reduziert oder idealerweise ganz verhindert werden. Dabei soll der Bediener bei seiner Arbeit in seiner Bewegungsfreiheit nicht unnötig eingeschränkt und die Vorteile der mobilen Fernbedienung mit der einfachen Bedienung und der Zeitersparnis sollen erhalten bleiben. Auch soll die Arbeitssicherheit wesentlich erhöht und die Anzahl Unfälle drastisch reduziert werden. Kurz zusammengefasst soll das System die Arbeit des LKW-Fahrers resp. des Bedieners unterstützen, sodass er seine Arbeit besser, flüssiger und zufriedener erledigen kann als mit den heute üblichen Systemen, und dafür sorgen, dass er trotz Routinearbeit und Hektik bestmöglich vor Arbeitsunfällen geschützt bleibt. Dazu ist es von grösstem Vorteil, wenn das System erkennt, ob sich ein Bediener im Bereich der beweglichen Hubladebühne befindet, ob eine Last auf der Plattform der Hubladebühne ist und ob die Plattform beim Bewegen ein Körperteil und/oder einen Gegenstand einklemmt. Zudem soll es möglich sein, dass abhängig vom Resultat einer Zonen-Lokalisierung und gegebenenfalls den erhaltenen aktuellen Werten von Sensoren Bewegungsberechtigungen der Plattform bestimmt und die Bewegungsabläufe der Plattform gezielt gesteuert werden können. Um die Sicherheit des Systems zu erhöhen, soll es idealerweise auch möglich sein, Messgrössen redundant zu bestimmen.

Diese komplexe Aufgabe konnte überraschenderweise gelöst werden mit einem System (1) zum sicheren Bedienen von Hubladebühnen (2) von LKWs, umfassend einen LKW (9) mit Koffer (91), einem mittels Hubladebühne (2) schliessbaren Ladebereich sowie eine mobile Fernbedienung (3), wobei die Hubladebühne (2) eine Plattform (21), eine Steuerelektronik (22) und ein Hydrauliksystem (23) mit Hubzylinder (231), Neigezylinder (232), Hydraulikleitungen (233), Hydraulikmotor (234) sowie Hydraulikventile (235) umfasst, dadurch gekennzeichnet, dass das System (1)
- eine Multi-Zonen-Lokalisierung (A) aufweist zur Bestimmung von Bewegungsberechtigungen der Plattform (21) mittels Lokalisation der mobilen Fernbedienung (3), umfassend mindestens zwei Nahbereichssensoren (4) zum Empfangen und Senden von Signalen von und zur mobilen Fernbedienung (3), wobei an jeder Seite des hinteren Bereichs des LKW (9) ein Nahbereichssensor (4) angeordnet ist, wobei die Nahbereichssensoren (4) an den einander gegenüberliegenden Seiten des LKW-Koffers (91) angeordnet sind, und die Nahbereichssensoren (4) so ausgewählt werden, dass die Dämpfung der Signalleistung der Nahbereichssensoren (4) zur LKW-Seite im Richtdiagramm um mindestens 6 dB höher ist als in die entgegengesetzte Richtung,
- gegebenenfalls ein Sensorpaket (B) umfasst zur Bestimmung, ob die Plattform (21) beladen ist, wobei das Sensorpaket (B) einen Inertialsensor (5) umfasst. welcher an der Plattform (21) angeordnet ist, und die Steuerelektronik (22) mit den Nahbereichssensoren (4) und gegebenenfalls dem Inertialsensor (5) verbunden ist, um die von den Sensoren (4, 5) empfangenen Signale in der Steuerelektronik (22) zu verarbeiten,
wobei die Steuerelektronik (22) so konfiguriert ist, dass die Multi-Zonen-Lokalisierung (A) mittels Lokalisation der mobilen Fernbedienung (3) den Raum in und um den LKW (9) in verschiedene Bedienzonen Z mit unterschiedlichen Bewegungsberechtigungen der Plattform (21) unterteilt, wobei mindestens
- eine erste für den Bediener sichere Zone Z1, in welcher eine uneingeschränkte Bedienung der Plattform (21) erlaubt ist, wobei die Zone Z1 eine Maximaldistanz D1 zu mindestens einem Nahbereichssensor (4) aufweist,
- gegebenenfalls eine zweite Zone Z2, welche den Bereich der in waagrechter Position angeordneten Plattform (21), sowie den daran seitlich und nach hinten angrenzenden Raum mit einer Maximaldistanz D2 zum Plattformende umfasst, wobei die Zone Z2 die Zonen Z1, Z3 und Z5 nicht umfasst,
- eine dritte Zone Z3 als maximalen Arbeitsbereich, in welcher eine eingeschränkte Bedienung erlaubt ist, wobei die Zone Z3 eine Maximaldistanz D3 zu mindestens einem Nahbereichssensor (4) aufweist, wobei die Zone Z3 die Zonen Z1, Z2 und Z5 nicht umfasst,
- eine vierte Zone Z4 alles ausserhalb den Zonen Z1, Z2, Z3 und Z5 umfasst, in welcher keine Bedienung der Plattform (21) erlaubt ist, und
- eine fünfte Zone Z5, die ausschliesslich den Bereich auf der Plattform (21) umfasst, in welcher, gegebenenfalls mittels eines Sensorpakets (B), erkannt wird, ob die Plattform (21) beladen oder leer ist,
wobei aufgrund der jeweiligen Bedienzonen Z1 bis Z5, sowie gegebenenfalls des mittels Inertialsensor (5) bestimmten aktuellen Plattformwinkels, die zonen-spezifischen, vordefinierten Bewegungsberechtigungen der Plattform, insbesondere deren maximaler Winkelgeschwindigkeit und Neigungswinkel, nicht überschritten werden.

Zudem wird auch ein Verfahren zum sicheren Bedienen von Hubladebühnen (2) von LKWs mit dem erfindungsgemässen System (1) beansprucht, umfassend
i) das Lokalisieren der mobilen Fernbedienung (3) mittels der Multi-Zonen-Lokalisierung (A) und Bestimmen des Abstands der Fernbedienung (3) zu mindestens einem Nahbereichssensor (4) mittels Senden und Empfangen von Signalen zwischen der Fernbedienung (3) und den Nahbereichssensoren (4), sowie Bestimmen der Bewegungsberechtigungen der Plattform (21) der Hubladebühne (2), und
ii) gegebenenfalls das Bestimmen mittels Sensorpaket (B) ob die Plattform (21) beladen ist, wobei mittels Inertialsensor (5) die Beschleunigung, der Winkel, die Winkelgeschwindigkeit und die Eigenfrequenz der Plattform (21) bestimmt wird,
wobei die Steuerelektronik (22) so konfiguriert wird, dass die Bedienzonen Z1 bis Z5 in und um den LKW (9) unterschiedliche Bewegungsberechtigungen der Plattform (21) aufweisen.

Des Weiteren wird auch das System (1) zum sicheren Bedienen von Hubladebühnen (2) von LKWs erhältlich nach dem erfindungsgemässen Verfahren beansprucht.

Beansprucht wird auch die Verwendung des erfindungsgemässen Systems (1) zum sicheren Bedienen von Hubladebühnen (2) von LKWs.

Das erfindungsgemässe System (1), erfindungsgemässe Verfahren und die erfindungsgemässe Verwendung weisen überraschenderweise viele Vorteile auf.

Die Multi-Zonen-Lokalisierung (A) lokalisiert die mobile Fernsteuerung (3) und somit deren Bediener, d.h. in der Regel der LKW-Fahrer, und bestimmt Bewegungsberechtigungen der Plattform (21) in Abhängigkeit zum Standort der Fernbedienung (3). Dadurch kennt das System (1) wo sich der Bediener in Relation zur Plattform (21) der Hubladebühne (2) befindet. Dies erlaubt der Steuerelektronik (22) das Bestimmen von Bewegungsberechtigungen der Plattform (21). Mit anderen Worten: befindet sich der Bediener noch im Fahrerhaus (92), wo er keine Sicht auf den Gefahrenbereich der Plattform (21) hat, oder zu weit von dieser entfernt ist, beispielsweise mehr als 10 m von der Plattform (21) entfernt, dann werden beispielsweise alle Bewegungsberechtigungen vollständig gesperrt. Befindet sich der Bediener hingegen an einer sicheren Position (Zone Z1) im Nahbereich der Plattform (21), wo der Gefahrenbereich überblickbar und das Risiko sehr gering ist, dass der Bediener durch die Plattform (21) verletzt wird, dann werden beispielsweise vollständige Bewegungsberechtigungen erteilt. Befindet sich der Bediener auf der Plattform (21), d.h. der Bediener befindet sich in der Zone Z5, und ist diese in einer beispielsweise horizontalen Winkelstellung, dann werden Bewegungen der Plattform (21) beispielsweise auf einen Winkelbereich von +- 10° und die Winkelgeschwindigkeit auf beispielsweise 3°/s eingeschränkt. Befindet sich der Bediener einige Meter von der Plattform (21) entfernt (Zone Z3) wird die Bewegungsfreiheit der Plattform (21) auf Bewegungen mit geringer Verletzungsgefahr eingeschränkt, wie beispielsweise das Heben und Senken der Plattform. Befindet sich hingegen der Bediener beim Öffnen der geschlossenen, d.h. in vertikaler Richtung angeordneten, Plattform (21) im Bereich, wo die zu öffnende Plattform (21) zu liegen kommt, oder leicht daneben, und somit in der Zone Z2, kann die Steuerelektronik (22) eine vollständige Öffnung der Plattform (21) - beispielsweise schon ab einem Neigungswinkel von 45° - blockieren. Dies verhindert, dass der Bediener durch die Plattform (21) verletzt wird. Eine noch grössere Gefahr ergibt sich, während dem Schliessvorgang der Plattform (21), insbesondere während der letzten 30° vor der vertikalen Endposition, da beispielsweise ein Arm des Bedieners eingeklemmt werden kann. In diesem Fall kann die Steuerelektronik (22) eine vollständige Schliessung der Plattform (21) blockieren, falls sich der Bediener nicht an einer als dafür geeignet definierten, sicheren Position aufhält. Die Aufzählung lässt sich beliebig fortsetzen für die weiteren Zonen, sodass sich das System (1) konform mit den geltenden Normen der geografischen Einsatzregion oder den für die Arbeitssicherheit verantwortlichen Person oder Organisation konfigurieren und betreiben lässt. Wenn sich der Bediener von der Plattform (21) aus der Zone Z3 vom LKW (9) weg bewegt - beispielsweise 10 m oder mehr von mindestens einem Nahbereichssensor (4) entfernt - gelangt er in die Zone Z4, in welcher er die Position der Plattform (21) nicht mehr verändern kann, d.h. die Bedienung der Plattform (21) ist nicht mehr erlaubt. Und wenn sich der Bediener von einer Zone in eine andere Zone begibt, passen sich automatisch die Bewegungsberechtigungen an die neue Zone an. Somit wird verhindert, dass mit der Plattform (21) Bewegungen ausgeführt werden, welche die Sicherheit des Bedieners oder anderer Personen gefährden können.

Mittels optionalem Sensorpaket (B) wird bestimmt, ob die Plattform (21) der Hubladebühne (2) i) beladen ist - sofern das System (1) noch weitere Sensoren wie einen Drucksensor (6) und/oder einen Strom-/Spannungssensor (7) umfasst - ii) beim Bewegen, d.h. Heben, Senken, Öffnen und Schliessen, einen Körperteil des Bedieners, beispielsweise einen Arm, oder einen Gegenstand, beispielsweise einen Teil der Fracht, einklemmt. Zudem erlaubt das Sensorpaket (B) iii) das gezielte Steuern der Bewegungsabläufe der Plattform (21). Überraschenderweise ist es möglich, mittels weniger Sensoren die verschiedenen zu bestimmenden Endgrössen wie Beladung der Plattform (21) redundant zu bestimmen, wodurch das System (1) noch sicherer und robuster wird.

Die Bestimmung, ob die Plattform (21) i) beladen ist, kann überraschenderweise mittels Sensorpaket (B) auf verschiedene Arten, d.h. redundant, erfolgen. So kann mittels Inertialsensor (5), gegebenenfalls einem Drucksensor (6) und/oder einem Strom-/Spannungssensor (7) ermittelt werden, ob auf der Plattform (21) ein Gewicht ist. Zudem kann das Gewicht der Last bestimmt werden, indem mittels Drucksensor (6) der Öldruck bestimmt wird, wenn die Hydraulikventile (235) der Hubzylinder (231) geöffnet resp. geschlossen sind. Alternativ kann das Gewicht der Last mittels Strom-/ Spannungssensor (7) über die Leistung des Hydraulikmotors (234) bestimmt werden, wenn die Plattform (21) vertikal nach oben bewegt wird und die Hydraulikventile (235) der Hubzylinder (231) geöffnet sind. Zudem kann mittels Inertialsensor (5) die Eigenfrequenz der Plattform (21) ermittelt werden, wodurch das Lastmoment und gegebenenfalls der Ort, wo sich das Gewicht befindet, bestimmt werden kann. Alternativ kann das Lastmoment bestimmt werden, indem mittels Drucksensor (6) der Öldruck des Hydrauliksystems (23) bestimmt wird, wenn das Hydraulikventil mindestens eines Neigezylinders (232) geöffnet wird. Mit einer weiteren Alternative kann mittels Strom-/ Spannungssensor (7) die Leistung des Hydraulikmotors (234) gemessen werden, wenn die Plattform (21) nach oben aufgeneigt wird, wenn die Hydraulikventile (235) der Neigezylinder (232) geöffnet sind. Die Tatsache, dass mittels unterschiedlicher Methoden bestimmt werden kann, ob die Plattform (21) beladen ist oder nicht, ist von grösstem Vorteil, da ein einzelner Sensor nur einen Teil der möglichen Lastsituationen und Ausführungsformen der Hubladebühne (2) abdeckt. Die erhaltende Redundanz erlaubt einen breiteren Anwendungsbereich und eine weitgehende Sicherheit, die vom Anwender auch so wahrgenommen wird, sodass dieser das System akzeptiert und wertschätzt.

Wenn die Plattform (21) ii) beim Bewegen einen Körperteil des Bedieners und/oder oder einen Gegenstand einklemmt, erkennt die Steuerelektronik (22) dies sofort und die Plattform (21) kann sofort gestoppt werden, wodurch der Bediener - oder andere Personen - geschützt und Unfälle vermieden werden können. Daher wird dieser Effekt auch «Einklemmschutz» genannt. Überraschenderweise reagiert das Sensorpaket (B) in Bezug auf den Effekt «Einklemmschutz» äusserst sensibel, sodass eine Kraft auf den eingeklemmten Körperteil oder Gegenstand von weniger als beispielsweise 500 N, insbesondere von weniger als 100 N, wirken, bevor die Plattform (21) gestoppt wird, was einer Gewichtskraft von 50 kg resp. lediglich 10 kg entspricht. Zudem kann überraschenderweise der Einklemmschutz mittels Sensorpaket (B) auf verschiedene Arten und somit ebenfalls redundant erfolgen.

Dazu werden zunächst für den Einklemmschutz Referenzwerte der leeren Plattform (21) ermittelt, und anschliessend bei jedem weiteren Heben, Senken, Öffnen oder Schliessen der Plattform (21) die aktuell gemessenen Werte mit den erwarteten Referenzwerten verglichen. Bei einer plötzlichen Änderung der Messwerte und/oder bei einer vordefinierten maximalen Abweichung des Messwerte-Verlaufes gegenüber dem Verlauf der Referenzwerte für die Bewegung der Plattform (21), wird die Plattform (21) gestoppt. Zur Bestimmung der aktuellen sowie der Referenzwerte werden mittels
- Inertialsensor (5) die Winkel-Beschleunigung, Winkelgeschwindigkeit und der Winkel der Plattform (21),
- Drucksensor (6) der Druck der Hydraulikleitungen (233) bei geöffnetem Hydraulikventil (235) des Neigezylinders (232), und/oder
- Strom-/Spannungssensor (7) die Leistungsaufnahme des Hydraulikmotors (234)
ermittelt.

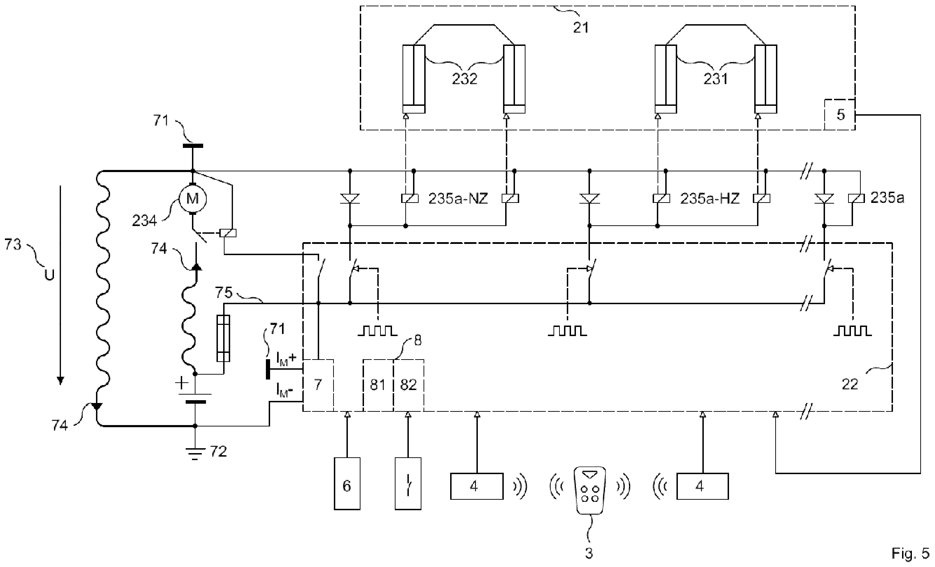

Wenn iii) die Bewegungsabläufe der Plattform (21) gezielt gesteuert werden sollen, erfolgt dies mittels Inertialsensor (5) des Sensorpakets (B) sowie der Steuerelektronik (22). Zudem wird mittels Inertialsensor (5), Drucksensor (6) und/oder Strom-/Spannungssensor (7) ermittelt, ob die Plattform (21) beladen ist. Anschliessend werden die Hydraulikventile (235), als on/off Magnet-Ventile (235a) ausgebildet, mittels Pulsweitenmodulation (PWM) durch die Steuerelektronik (22) so angesteuert, dass die Neigungsgeschwindigkeit der Plattform (21) begrenzt, auf einen gemäss Bewegungsberechtigung vordefinierten Wert abgebremst, oder gestoppt wird. Dieser Vorgang wird auch «Plattformbremse» genannt. Überraschenderweise können damit die Bewegungen der Plattform (21) erstaunlich fein eingestellt werden, ohne dafür teure Proportionalventile verwenden zu müssen. Zur Pulsweitenmodulation wird vorgeschlagen, die Magnet-Ventile (235a) mit Spannungspulsen der Frequenz von vorzugsweise 1000 Hz, mindestens 200 Hz und maximal 5000 Hz zu beaufschlagen Die Ansteuerfrequenz ist dadurch um mindestens eine Grössenordnung, also mindestens Faktor 10, höher als die mechanische Trägheit der Ventile (235a) und der zeitliche Verlauf des Stroms in der Ansteuerspule kommt einem reinen Gleichstrom nahe, was zu reproduzierbareren Ergebnissen für die Proportionalsteuerung der Hydraulikzylinder (231, 232) führt. Zudem wird vorgeschlagen, die derart angesteuerten Ventile (235a), wie in Figur 5 gezeigt, mit einer Freilaufdiode elektrisch parallel zu schalten, welche sich aus Sicherheitsüberlegungen vorteilhafterweise ausserhalb der Steuerelektronik (22) befinden sollte. Durch die Pulsweitenmodulation mit genügend hoher Frequenz und der erwähnten Freilaufdiode ergibt sich aufgrund der Induktivität der Ansteuerspule ein nahezu reiner resp. wenig pulsierender Gleichstrom in der Ansteuerspule der Ventile (235a). Als zusätzlicher vorteilhafter Nebeneffekt ergibt sich eine um mindestens Faktor zwei reduzierte elektrische Ansteuerleistung der Ventile (235a), verglichen mit der herkömmlichen Ansteuerung, wo während der ganzen aktiven Zeit die volle Versorgungsspannung des LKW an den Ansteuerspulen anliegt. Dadurch wird die Batterie des LKW geschont, was vor allem im Winter bei tiefen Temperaturen nicht nur die Betriebsdauer der Hubladebühne (2) verlängert, sondern auch die Fahrzeugbatterie schont.

Somit erlaubt das erfindungsgemässe System (1), das erfindungsgemässe Verfahren sowie die erfindungsgemässe Verwendung eine sehr genaue Lokalisierung der mobilen Bedieneinheit und somit des Bedieners, welcher mittels Bedieneinheit die Bewegungen der Hubladebühne (2) mit der Plattform (21) steuern will. Auch können 5 oder mehr verschiedene Zonen mit unterschiedlichen Berechtigungen definiert werden. Dadurch kann je nach Gefahrenzone - in der Regel bestimmt durch den Abstand des Bedieners zur Plattform (21) - eine bestimmte Bewegungsberechtigung der Plattform (21) erteilt werden. Dies erhöht die Sicherheit bei der Benützung der Hubladebühne (2) und reduziert das Unfallrisiko deutlich, ohne dass die Bewegungsfreiheit des Bedieners stark eingeschränkt wird.

Auch ist es möglich mindestens die vier grundlegenden Bewegungen der Plattform (21) - unter Verwendung entsprechender Sensoren (5, 6, 7) - in einer zeitsparenden Weise zu überwachen, zu steuern und zu regeln.

Dadurch ist der Bediener und seine unmittelbare Umgebung trotz der mobilen Fernsteuerung nicht gefährdet. Das System (1) verhält sich automatisch und konform mit den geltenden Vorschriften zur Arbeitssicherheit und Unfallverhütung. Denn das System (1) und das Verfahren ermöglichen mittels den verschiedenen Sensoren, dass der aktuelle Standort des Bedieners lokalisiert wird, dass es gefährliche und unerwartete Situationen automatisch detektiert, indem es Abweichungen vom Normalzustand erkennt und dass es über die elektromagnetischen Hydraulikventile (235) einen jeweils sicheren Zustand einleiten oder herbeiführen kann.

### Das System

Das erfindungsgemässe System (1), das erfindungsgemässe Verfahren sowie die erfindungsgemässe Verwendung sind besonders geeignet zum sicheren Bedienen von Hubladebühnen (2), d.h. Ladebordwand oder Hebebühne, von LKWs. Der Begriff LKW (9) steht für Lastkraftwagen, d.h. Zugmaschinen, und umfasst Anhänger, welche von Lastkraftwagen gezogen werden. Mit eingeschlossen im Begriff des LKW (9) sind auch kleinere Fahrzeuge des Gütertransports mit einem Gesamtgewicht von unter 3.5 t, wenn diese mit einer Hebebühne (2) ausgerüstet sind. Der LKW (9) weist einen Kofferaufbau, d.h. Koffer (91), auf, in welchem Gegenstände resp. Frachtgut frei von Wettereinflüssen gelagert und transportiert werden können.

Das System (1) umfasst einen LKW (9) mit Koffer (91), einen mittels Hubladebühne (2) schliessbaren Ladebereich sowie eine mobile Fernbedienung (3). Dabei umfasst die Hubladebühne (2) eine Plattform (21), eine Steuerelektronik (22) und ein Hydrauliksystem (23) mit typischerweise zwei Hubzylinder (231) und zwei Neigezylinder (232), Hydraulikleitungen (233), Hydraulikmotor (234) sowie Hydraulikventile (235). Die Hydraulikventile (235) sind bevorzugt als elektromagnetische Ventile ausgebildet. Dabei ist die Hubladebühne (2) am Heck des LKWs (9) am Fahrzeugrahmen resp. an der Hecktraverse angebracht.

Die Plattform (21) der Hubladebühne (2) wird durch Betätigung der Hubzylinder (231) mittels der Ventile (235a-HZ) vertikal bewegt, wodurch die Plattform, wenn horizontal angeordnet, gehoben resp. gesenkt werden kann. Durch Betätigung der Neigezylinder (232) mittels der Ventile (235a-NZ) wird die Plattform (21) geneigt, d.h. die im 90° Winkel angeordnete, geschlossene Plattform (21) kann mittels Neigezylinder (232) in eine waagrechte oder leicht abfallende Position reversibel verschoben werden. Die Hydraulikzylinder (231, 232) sind Teil des Hydrauliksystems (23) und werden durch Öffnen resp. Schliessen der Hydraulikventile (235) sowie gegebenenfalls durch Umschalten des Wegeventils (235-WV) für die Flussrichtung des Hydrauliköls sowie den Hydraulikmotor (234), welcher Hydrauliköl durch die geöffneten Hydraulikventile (235) in die Hydraulikzylinder (231, 232) pumpt, bewegt. Der Hydraulikmotor (234) besteht hauptsächlich aus dem elektrischen Antriebsmotor, der typischerweise über einen elektromagnetisch betätigten Schalter ein- und ausgeschaltet wird und einer Hydraulikpumpe, die über eine Antriebswelle mit dem Antriebsmotor verbunden ist.

Das System (1) weist zudem eine Multi-Zonen-Lokalisierung (A) zur Bestimmung von Bewegungsberechtigungen der Plattform (21) mittels Lokalisation der mobilen Fernbedienung (3) auf, und gegebenenfalls ein Sensorpaket (B) umfassend einen Inertialsensor (5). Zudem kann das Sensorpaket (B) weitere Sensoren aufweisen, insbesondere einen Drucksensor (6) und/oder einen Strom-/Spannungssensor (7). Das Sensorpaket (B) ist geeignet zur Bestimmung, ob die Plattform (21) beladen ist, beim Bewegen, d.h. Heben, Senken, Öffnen und Schliessen, einen Gegenstand einklemmt, und/oder zum gezielten Steuern der Bewegungsabläufe der Plattform (21).

Anhand der Multi-Zonen-Lokalisierung (A) zur Bestimmung von Bewegungsberechtigungen der Plattform (21) mittels Lokalisation der mobilen Fernbedienung (3) kann der Standort des Bedieners der Fernbedienung (3) bestimmt werden. Die Lokalisation erfolgt mittels Senden und Empfangen, insbesondere mittels mehrmaligem Senden und Empfangen, von Signalen zwischen der Fernbedienung (3) und den Nahbereichssensoren (4). Gemäss der entsprechenden Zone, in welcher die Fernbedienung (3), und somit der Bediener, zugeordnet wird, erteilt oder verweigert die Multi-Zonen-Lokalisierung (A) die Erlaubnis für bestimmte Bewegungen, d.h. Bewegungsberechtigungen, der Plattform (21).

Die Multi-Zonen-Lokalisierung (A) kann zudem den Standort des Bedieners im Bereich der Plattform (21) auch hinter dem LKW (9) mittels Senden und Empfangen von Signalen zwischen der Fernbedienung (3) und den Nahbereichssensoren (4) bestimmen. Wird auf diese Art und Weise auch der Standort der Fernbedienung auf der Plattform (21) ermittelt, wird ein Sensorpaket (B) mit Inertialsensor (5) nicht benötigt. Allerdings ist es oft hilfreich, den Standort des Bedieners im Bereich der Plattform (21) genauer zu bestimmen, d.h. ob er auf oder neben der Plattform (21) ist. Hierzu dient das Sensorpaket (B) mit Inertialsensor (5) zur Bestimmung, ob sich eine Last, beispielsweise der Bediener, auf oder neben der Plattform (21) aufhält. Dabei wird angenommen, dass sich der Bediener zusammen mit der Fernbedienung (3) und dem Frachtgut auf der Plattform (21) befindet. Denn vom Standpunkt der Sicherheit spielt es keine Rolle, ob der Bediener zusammen mit Frachtgut auf der Plattform (21) ist oder nicht, da das Gefährdungspotential durch die Last der Ladung bereits gegeben ist und die Plattform (21) deshalb nur eingeschränkt bedienbar sein darf.

Die Steuerelektronik (22) des Systems (1) ist mit den Nahbereichssensoren (4), dem Inertialsensor (5) - und sofern vorhanden - mit dem Drucksensor (6) und/oder dem Strom-/Spannungssensor (7) verbunden, um die von den Sensoren (4, 5, 6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen.

Mittels Steuerelektronik (22) können aus den Rohdaten der Sensoren weitere physikalische Grössen bestimmt und Entscheidungen zur Bedienersicherheit getroffen werden. Beispielsweise kann aus den Beschleunigungsdaten zweier Achsen des mehrachsigen Inertialsensors (5) der resultierende Neigungswinkel der Plattform (21) berechnet werden. Zudem kann aus dem zeitlichen Verlauf dieser Neigungsdaten die Winkelgeschwindigkeit der Plattform (21) berechnet werden.

Bei der Bestimmung, ob die Plattform (21) beladen ist, beim Bewegen, d.h. Heben, Senken, Öffnen und Schliessen, einen Gegenstand einklemmt, und/oder zum gezielten Steuern der Bewegungsabläufe der Plattform (21), ist es hilfreich zu wissen, ob die Plattform (21) mit einem Gewicht beladen ist oder nicht, und falls ja, wie gross das Lastmoment ist. Beim Gewicht spielt es keine Rolle, wo das Gewicht, d.h. die Last, auf der Plattform (21) und wo sich der Schwerpunkt der Last befindet. Die Bestimmung des Lastmoments, d.h. das Produkt aus Gewicht und der Distanz zur Ladekante am fahrzeugseitigen Ende, gibt Auskunft, ob die Last in der Nähe dieser Ladekante, also am inneren Ende der Plattform (21) oder am äusseren Ende der Plattform - also nahe der Plattformspitze - angeordnet ist. Denn wenn sich die Last im Bereich der Plattformspitze befindet, ist das maximal erlaubte Gewicht gemäss Lastdiagramm geringer als die Nennlast und das Gefahrenpotential ist erhöht. Somit können - wenn sich eine Last auf der Plattform (21) befindet - Neigebewegungen mit stark reduzierter Geschwindigkeit und besonders sanft ausgeführt werden, um das Ladegut stabil zu halten.

Wenn die Plattform (21) in ungefähr waagerechter Lage mittels Beladung, Entladung, Start oder Stopp angeregt ist, beispielsweise mittels einer Plattform-Bewegung oder mechanisch mit einem Impuls, dann baut sich eine Schwingung an der Plattform (21) mit charakteristischer Eigenfrequenz und Dämpfung auf. Die Eigenfrequenz ist umgekehrt proportional zur Wurzel der Masse bzw. des Lastmoments. Je mehr Gewicht sich also auf der Plattform (21) und je weiter aussen sich der Schwerpunkt dieses Gewichts auf der Plattform (21) befindet, desto tiefer ist diese mechanische Eigenschwingung der Plattform (21) und desto höher ist die Periodendauer dieser mit der Zeit abklingenden Pendelschwingung der Plattform (21). Beispielsweise liegt die Eigenfrequenz einer leeren Plattform (21) bei 5Hz, während sie bei zusätzlicher Belastung mit 200kg in der Plattform-Mitte auf 3.5 Hz absinkt. Kennt man also die Eigenfrequenz der leeren Plattform (21), lässt sich aus der gemessenen Eigenfrequenz das aktuelle Lastmoment und somit die Belastung der Plattform (21) berechnen. Wird die Plattform (21) mit einem Impuls zu dieser Eigenschwingung angeregt, lässt sich die Frequenz und somit das Lastmoment aus mehreren Sensordaten bestimmen. Ob und gegebenenfalls wie stark die Plattform (21) belastet ist, wird mittels Informationen vom Sensorpaket (B) bestimmt.

### Die Multi-Zonen-Lokalisierung (A)

Die Multi-Zonen-Lokalisierung (A) des erfindungsgemässen Systems (1) und des erfindungsgemässen Verfahrens ist geeignet zur Bestimmung von Bewegungsberechtigungen der Plattform (21) mittels Lokalisation der mobilen Fernbedienung (3) und somit des Bedieners der Fernsteuerung (3). Dabei umfasst die Multi-Zonen-Lokalisierung (A) mindestens zwei Nahbereichssensoren (4) zum Empfangen und Senden von Signalen von und zur mobilen Fernbedienung (3). Überraschenderweise wurde gefunden, dass mit lediglich 2 Nahbereichssensoren (4) bis zu 5 oder mehr verschiedene Zonen mit unterschiedlichen Bewegungsberechtigungen der Plattform (21) definiert werden können. Dabei erfolgt die Lokalisation der Fernbedienung (3) mittels Senden und Empfangen, insbesondere mittels mehrmaligem Senden und Empfangen, von Signalen zwischen der Fernbedienung (3) und den Nahbereichssensoren (4), wobei die empfangenen Signale in der Steuerelektronik (22) ausgewertet werden.

Die Multi-Zonen-Lokalisierung (A) umfasst mindestens zwei Nahbereichssensoren (4) zum Empfangen und Senden von Signalen von resp. an die mobile Fernbedienung (3), wobei
- an jeder Seite, d.h. an der in Fahrtrichtung linken und rechten Seite, des hinteren Bereichs des LKW (9) ein Nahbereichssensor (4) angeordnet ist, wobei die Nahbereichssensoren (4) an den einander gegenüberliegenden Seiten des LKW-Koffers (91) angeordnet sind, wobei die Anordnung der Nahbereichssensoren (4) bevorzugt symmetrisch erfolgt, und
- die Nahbereichssensoren (4) so ausgewählt werden, dass die Dämpfung der Signalleistung der Nahbereichssensoren (4) zur LKW-Seite, d.h. in Richtung Kofferaufbau des LKW (9), im Richtdiagramm, d.h. Antennendiagramm, um mindestens 6 dB höher ist als in die entgegengesetzte Richtung, d.h. zur LKW (9) abgewandten Seite.

Die Steuerelektronik (22) ist so konfiguriert, dass die Multi-Zonen-Lokalisierung (A) mittels Lokalisation der mobilen Fernbedienung (3) den Raum in und um den LKW (9), d.h. das innere des LKWs, inkl. Fahrerkabine und das Innere des Koffers (91), sowie das Umfeld des LKW (9) und die Plattform (21), in verschiedene Bedienzonen Z mit unterschiedlichen Bewegungsberechtigungen der Plattform (21) unterteilt werden, wobei mindestens
- eine erste für den Bediener sichere Zone Z1, in welcher eine uneingeschränkte Bedienung der Plattform (21) erlaubt ist, wobei die Zone Z1 eine Maximaldistanz D1 zu mindestens einem Nahbereichssensor (4) aufweist, wobei die Maximaldistanz D1 beispielsweise 0.5 bis 1 m beträgt, sodass der Bediener die Plattform (21) gut überblicken kann, durch diese aber nicht gefährdet ist und sich auch nicht auf derselben aufhalten kann,
- gegebenenfalls eine zweite Zone Z2, welche den Bereich der in waagrechter Position angeordneten Plattform (21), nicht aber den Bereich auf der Plattform (21) selbst, sowie den daran seitlich und nach hinten angrenzenden Raum mit einer Maximaldistanz D2 zum Plattformende umfasst, wobei die Maximaldistanz D2 beispielsweise 1 bis 2 m beträgt. In dieser Zone befindet sich der Bediener je nach Neigewinkel der Plattform (21) direkt unterhalb oder in der Nähe derselben. In der Zone Z2 sind die Zonen Z1, Z3 und Z5 nicht umfasst,
- eine dritte Zone Z3 als maximalen Arbeitsbereich, in welcher eine eingeschränkte Bedienung erlaubt ist, wobei die Zone Z3 eine Maximaldistanz D3 zu mindestens einem Nahbereichssensor (4) aufweist, wobei die Zone Z3 die Zonen Z1, Z2 und Z5 nicht umfasst. Dabei weist die Zone Z3 zu mindestens einem Nahbereichssensor (4) eine Maximaldistanz D3 von beispielsweise 5 bis 8 m auf. In dieser Zone ist die Sicht auf die Plattform (21) nur teilweise gegeben, dafür besteht keine Gefahr für die eigene Person,
- eine vierte Zone Z4 alles ausserhalb den Zonen Z1, Z2, Z3 und Z5 umfasst, in welcher keine Bedienung der Plattform (21) erlaubt ist. Insbesondere ist das Fahrerhaus (92) Bestandteil dieser Zone, damit weder während der Fahrt noch vor dem Aussteigen irgendwelche Bewegungen der Plattform (21) ausgeführt werden können, und
- eine fünfte Zone Z5, die ausschliesslich den Bereich auf der Plattform (21) umfasst, in welcher, gegebenenfalls mittels eines Sensorpakets (B), erkannt wird, ob die Plattform (21) beladen oder leer ist. Bei geschlossener, d.h. vertikal angeordneter, Plattform (21) tendiert die Zone Z5 somit gegen null. Falls die Steuerelektronik (22) den Bediener sowohl in Zone Z5 als auch in Zone Z2 detektiert, werden die Bewegungsberechtigungen der Zone Z5 zugeordnet,
wobei aufgrund der jeweiligen Bedienzonen Z1 bis Z5, sowie gegebenenfalls des mittels Inertialsensor (5) bestimmten aktuellen Plattformwinkels, die zonen-spezifischen, vordefinierten Bewegungsberechtigungen der Plattform, insbesondere deren maximaler Winkelgeschwindigkeit und Neigungswinkel, nicht überschritten werden. Die Zone Z2 kann auch in die Zone Z3 integriert sein, sodass die Zone Z3 den Bereich der Zone Z2 mitumfasst. Neben den Zonen Z1 bis Z5 können auch noch weitere Zonen definiert werden, beispielsweise die Ladefläche des Koffers (91).

Die mobile Fernbedienung (3) kommuniziert mit der Steuerelektronik (22) bevorzugt mittels Funkwellen, bevorzugt im UHF-Band im Bereich von 300 MHz bis 3 GHz; Ultraschallwellen, bevorzugt im Frequenzbereich von 15 kHz bis 200 kHz; Magnetwellen, bevorzugt im Bereich von 50 kHz bis 200 kHz; und/oder Lichtwellen, bevorzugt im Bereich der Infrarotwellen bis Ende des sichtbaren Lichtspektrums und somit von ca. 4000 nm bis 400 nm. Alternativ - oder zusätzlich - weist die mobile Fernbedienung (3) einen mehrachsigen Inertialsensor auf. Dies erlaubt die Bestimmung der Beschleunigung der Fernbedienung (3), was besonders wichtig ist, wenn die Fernbedienung (3) - und somit der Bediener- sich auf der Plattform (21) befindet. Dadurch kann die Richtung, der Wert und der Zeitpunkt der Plattform-Beschleunigung bestimmt werden. Da die Plattform (21) mit derselben mobilen Fernbedienung (3) in eine bestimmte Richtung bewegt wird, kann die mobile Fernbedienung (3) oder die Steuerelektronik (22) mittels Inertialsensor eine Korrelation der beiden Bewegungen berechnen. Somit weiss das System, ob sich der Bediener auf oder neben der Plattform (21) befindet. Dementsprechend ist dies eine alternative Möglichkeit zur Lokalisierung der Zone Z5. Dabei kann der Bautyp des Inertialsensors der Fernbedienung (3) mit dem Bautyp des Intertialsensors (5) des Sensorpakets gleich oder verschieden sein.

Die Nahbereichssensoren (4) können auf Metall, Holz, Kunststoff und Textilien angeordnet sein, wobei Metall oft bevorzugt wird. Idealerweise dient der Untergrund auch als Reflektor, wodurch die Richtwirkung der Sensoren (4) verstärkt wird. Die Nahbereichssensoren (4) werden vorteilhafterweise so platziert, dass sie maximal 50 mm, bevorzugt maximal 30 mm, insbesondere höchstens 15 mm, aus der bestehenden Fläche ohne Sensoren hervorragen, was eine Beschädigung der Nahbereichssensoren (4) durch einen externen Gegenstand verhindert. Dies wird typischerweise durch eine flache Bauweise der Nahbereichssensoren (4) erzielt und/oder indem die Nahbereichssensoren (4) unterhalb des Kofferaufbaus wenige cm zurückversetzt angeordnet werden. Besonders bevorzugt wird eine flache und für die direkte Montage auf einer ausgedehnten Metallfläche geeignete Sensorart verwendet, welche die Signalausbreitung gegen die Montagefläche, d.h. die genannte Metallfläche, hin stark dämpfen oder reflektieren. Geeignete Metallflächen sind beispielsweise der untere Teil des Kofferaufbaus oder der Fahrzeugrahmen.

In einer bevorzugten Ausführungsform sind die Nahbereichssensoren (4) der Multi-Zonen-Lokalisierung (A)
- 0 bis 1.5 m, bevorzugt 0.3 m bis 1 m, gemessen in horizontaler Richtung, von der Heckkante des LKW (9) beabstandet. Zudem sind sie in vertikaler Richtung bevorzugt am unteren Ende des LKW-Kofferaufbaus und/oder ca. in 1 m Höhe ab Boden angeordnet;
- am seitlichen, unteren Bereich des LKW-Koffers (91), und bevorzugt symmetrisch, angeordnet, wobei der Koffer (91) bevorzugt als Reflektor für die Signalübertragung zwischen den Nahbereichssensoren (4) und der mobilen Fernbedienung (3) ausgebildet ist und somit bevorzugt eine Metallfläche zur Befestigung der Nahbereichssensoren (4) umfasst. Dies ist insbesondere dann besonders vorteilhaft, wenn die Signalübertragung der mobilen Fernbedienung (3) auf Funkwellen basiert. Der Einsatz eines Reflektors bewirkt eine besonders gute Richtwirkung der Nahbereichssensoren (4). Der Begriff Koffer (91) umfasst auch Kastenaufbauten und Kofferaufbauten;
- in Form von Patchantennen ausgebildet, d.h. die Nahbereichssensoren (4) liegen in Form von Patchantennen vor, insbesondere wenn die Nahbereichssensoren (4) auf Metall montiert sind. Dabei versteht der Fachmann unter Patchantenne eine besonders flache Antennenvariante, beispielsweise mit einer Dicke von höchstens 30 mm, insbesondere von höchstens 20 mm, die eine gute Richtwirkung aufweist, insbesondere wenn sie mit einer dahinter liegenden, als Reflektor dienenden Metallfläche kombiniert ist und somit die Signalausbreitung gegen die Montagefläche hin stark dämpfen oder reflektieren. So kann ein Einzelelement einen Gewinn von annähernd 10 dBi erreichen. Geeignete Patchantennen sind dem Fachmann bekannt und im Handel erhältlich.

Für den Fachmann war es äusserst überraschend, dass sich Patchantennen für die Zonen-Lokalisierung (A) sehr gut eignen. So können sie problemlos auf Metall angeordnet werden, ohne die Signalleistung zu reduzieren. Auch verstärkt Metall als Untergrund die Richtwirkung der darauf befestigten Patchantennen. Dies erleichtert die Lokalisation der mobilen Fernbedienung (3), was in dieser Form nicht erwartet werden konnte.

### Das Sensorpaket (B)

Das erfindungsgemässe System (1), das erfindungsgemässe Verfahren und die erfindungsgemässe Verwendung umfasst bevorzugt ein Sensorpaket (B) zur Bestimmung, ob die Plattform (21) beladen ist, wobei das Sensorpaket (B) einen Inertialsensor (5) umfasst. welcher an der Plattform (21) angeordnet ist. Zudem kann das Sensorpaket (B) einen Drucksensor (6) und/oder einen Strom-/Spannungssensor (7) umfassen.

Umfasst das System (1) einen an der Plattform (21) angebrachten Inertialsensor (5), berechnet die Steuerelektronik (22) aufgrund der jeweiligen Berechtigungen für die definierten Zonen, beispielsweise die Zonen Z1 bis Z5, den aktuellen Plattformwinkel, welcher mittels Inertialsensor (5) bestimmt wird. Dies wiederum erlaubt die nähere Bestimmung der zonen-spezifischen, vordefinierten Bewegungsberechtigungen der Plattform (21), insbesondere die maximale Winkelgeschwindigkeit, beispielsweise wenn die Plattform (21) beladen ist, von 3°/sec oder 4°/sec, und den max. Neigungswinkel, beispielsweise von +/-10°, welche nicht überschritten werden dürfen.

Das optionale Sensorpaket (B) ist zudem geeignet zur Bestimmung, ob die Plattform (21) i) beladen ist, ii) beim Bewegen einen Gegenstand einklemmt, und/oder iii) zum gezielten Steuern der Bewegungsabläufe der Plattform (21).

Ist die Plattform (21) beladen, wird angenommen, dass sich der Bediener der mobilen Fernbedienung (3) auf der Plattform (21) aufhält. Ist die Plattform (21) nicht beladen, hält sich der Bediener neben der Plattform (21) auf. Denn wenn die Plattform (21) beladen ist, müssen die Bewegungsabläufe der Plattform (21) eingeschränkt und gezielt gesteuert werden.

Wenn die Plattform (21) beim Bewegen einen Gegenstand einklemmt, müssen die Bewegungsabläufe sofort geändert werden, d.h. die Bewegung der Plattform (21) muss in aller Regel gestoppt werden.

In einer bevorzugten Ausführungsform umfasst des Sensorpaket (B) zudem
b1) einen an den Hydraulikleitungen (233) des Hydrauliksystems (23) angeordneten Drucksensor (6) zur Bestimmung des auf der Plattform (21) befindlichen Gewichts und dessen Lastmoments,
b2) einen Strom-/Spannungssensor (7) zur Bestimmung der elektrischen Leistung, Spannung (75) und/oder Stromstärke (74) des Hydraulikmotors (234), und/oder
b3) mindestens einen weiteren optionalen Sensor (8), beispielsweise einen Temperatursensor,
wobei die Steuerelektronik (22) mit dem Drucksensor (6), dem Strom-/ Spannungssensor (7) und/oder den weiteren Sensoren (8) verbunden ist, um die von den Sensoren (6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen. Dies erlaubt die Bestimmung, ob die Plattform (21) beim Bewegen einen Gegenstand einklemmt, und/oder das gezielte Steuern der Bewegungsabläufe der Plattform (21).

Das Sensorpaket (B) kann als weiteren Sensor (8) beispielsweise auch mindestens einen Temperatursensor (81) umfassen. Dies erlaubt temperaturabhängige Messparameter in temperaturunabhängige Parameter umzuwandeln.

Der Inertialsensor (5) ist ein wesentlicher Bestandteil, und somit zwingender Sensor, des Sensorpakets (B). Aus Sicherheitsgründen kann der Inertialsensor (5) auch redundant resp. mehrfach vorhanden sein.

Unter dem Begriff Inertialsensor (5) wird erfindungsgemäss eine mehrachsige Inertial Measurement Unit, d.h. IMU, verstanden. Eine IMU enthält dabei mehrere Trägheitssensoren zur Messung der Erdbeschleunigung und der Winkelgeschwindigkeit. Der Inertialsensor (5) umfasst also sowohl einen mehrachsigen Beschleunigungssensor wie auch vorteilhafterweise einen mehrachsigen Gyrosensor. Dabei bedeutet mehrachsig, dass in mindestens zwei, bevorzugt in drei räumlichen Achsen, typischerweise in den x-, y- und z-Koordinaten, mikromechanische Trägheitssensoren angeordnet sind zur Bestimmung der Beschleunigungskräfte (bei Beschleunigungssensoren) und/oder der Drehrate bzw. Winkelgeschwindigkeit (bei Gyrosensoren). Im bewegungslosen Zustand misst der Inertialsensor (5) die Erdbeschleunigung. Mittels Trigonometrie wird die räumliche Lage bzw. der räumliche Winkel des Sensors, und somit der Plattform (21), berechnet. Verändern sich die Beschleunigungswerte infolge einer Bewegung der Plattform (21), kann die momentane Geschwindigkeit sowie der zurückgelegte Weg oder Winkel berechnet werden. Enthält der Inertialsensor (5) auch einen Gyrosensor, ermittelt dieser selbst eine Drehrate, sodass die Winkelgeschwindigkeit direkt gemessen und nicht mithilfe der Angaben des Beschleunigungssensors und unter Verwendung der Zeitinformation ermittelt werden muss. Dies reduziert den Berechnungsaufwand für die Steuerelektronik (22). Die Anwesenheit eines Gyrosensors ist nicht zwingend, jedoch vorteilhaft, da damit die Rechenleistung geringgehalten werden kann.

Der Inertialsensor (5) misst die Beschleunigung und/oder die Drehbewegung der Plattform (21). Mit Hilfe des Inertialsensors (5)
- kann bestimmt werden, ob die Plattform (21) beladen ist,
- kann bestimmt werden, wie gross die Eigenfrequenz der Plattform (21) ist,
- kann bestimmt werden, wie gross die Winkel-Beschleunigung, Winkelgeschwindigkeit und der Winkel der Plattform (21) ist,
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen, indem zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden, wobei bei einer plötzlichen Änderung der Messwerte und/oder bei einer Abweichung des Messwerte-Verlaufes gegenüber dem Verlauf der Referenzwerte die Bewegung der Plattform (21) gestoppt wird,
- können die Hydraulikventile (235), welche bevorzugt als herkömmliche «on/off»-Magnet-Ventile (235a) ausgebildet sind, mittels Pulsweitenmodulierung (PWM) so gesteuert werden, wie wenn die Hydraulikventile (235) als Proportionalventile ausgebildet wären.

In einer bevorzugten Ausführungsform ist der Inertialsensor (5) an der Plattform (21) an einer vor Beschädigung gut geschützten Stelle aussen, d.h. an der Unterseite der Plattform (21), wenn die Plattform (21) in waagrechter Position ist, und im unteren Teil der - vertikal angeordneten - Plattform, oder an ähnlicher Stelle innen in einem Hohlraum der Plattform, angeordnet.

Geeignete Inertialsensoren (5) sind dem Fachmann bekannt und im Handel erhältlich.

Der Drucksensor (6) ist an den Hydraulikleitungen (233) des Hydrauliksystems (23) angeordnet und dient zur Bestimmung des auf der Plattform (21) befindlichen Gewichts und dessen Lastmoments. Der Drucksensor (6) misst den Öldruck des Hydrauliköls, welches sich im Hydrauliksystem (23) befindet. Durch gezieltes Öffnen resp. Schliessen der Hydraulikventile (235) der Neige- (232) und Hubzylinder (231) kann auch der Öldruck innerhalb der Zylinder (231, 232) bestimmt werden. Mit dieser Anordnung wird überraschenderweise nur ein Drucksensor (6) benötigt, was ein deutlicher Vorteil gegenüber dem Stand der Technik ist. Es kann ein oder mehr als ein Drucksensor (6) eingesetzt werden.

Der Drucksensor (6) misst den Öldruck im Hydrauliksystem (23) und somit den Druck, welcher die Plattform (21) auf das Hydrauliksystem (23) ausübt. Mit Hilfe des Drucksensors (6)
- kann bestimmt werden, ob die Plattform (21) beladen ist,
- kann das Gewicht auf der Plattform (21) bestimmt werden, indem das Hydraulikventil (235) mindestens eines Hubzylinders (231) geöffnet und der Öldruck mittels Drucksensor (6) gemessen wird,
- kann das Lastmoment bestimmt werden, indem das Hydraulikventil (235) mindestens eines Neigezylinders (232) geöffnet und der Öldruck mittels Drucksensor (6) gemessen wird, sowie
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen. Dabei misst der Drucksensor (6) den Druck der Hydraulikleitungen (233) bei geöffnetem Hydraulikventil (235) des Neigezylinders (232), wobei zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden. Bei einer plötzlichen Änderung der Messwerte und/oder bei einer Abweichung des Messwerte-Verlaufes gegenüber dem Verlauf der Referenzwerte wird die Bewegung der Plattform (21) gestoppt.

Der Drucksensor (6) ist mit einem Leitungskabel und/oder drahtlos, beispielsweise mittels Funkdatenübertragung, mit der Steuerelektronik (22) verbunden.

In einer bevorzugten Ausführungsform ist der Drucksensor (6) in einem Zwischenkreis der Hydraulikleitungen (233) des Hydrauliksystems (23), welches sowohl die Neige- (232) wie auch die Hubzylinder (231) speist, angeordnet, wobei
- der Zwischenkreis bevorzugt die Neige- wie auch die Hubzylinder (232, 231) speist, und/oder
- das Hydrauliksystem (23) mindestens ein Drosselventil (236) aufweist, welches sich bevorzugt in der rückseitigen Flussrichtung hin zum Hydrauliköltank befindet.

Dabei bewirkt Drosselventil (236), welches den Ölfluss drosselt, d.h. verlangsamt, dass das Hydrauliköl beim Öffnen und Absenken der Plattform (21) - und somit beim Öffnen der Hydraulikventile (235) der Neige- und/oder Hubzylinder (232, 231) - das Öl nicht drucklos abfliesst. Demzufolge kann auch beim Öffnen und Absenken der Plattform (21) ein Öldruck gemessen werden.

Geeignete Drucksensoren (6) sind dem Fachmann bekannt und im Handel erhältlich.

Unter dem Begriff Strom-/Spannungssensor (7) wird erfindungsgemäss ein Sensor, d.h. eine Messanordnung, verstanden, welcher sowohl die Stromstärke I in Ampère [A] wie auch die Stromspannung U in Volt [V] des Hydraulikmotors (234) misst. Dadurch kann gemäss Ohm'schen Gesetz auch der elektrische Widerstand R in Ohm [Ω] als auch die elektrische Leistung P in Watt [W] ermittelt werden. Es kann ein oder mehr als ein Strom-/Spannungssensor (7) eingesetzt werden.

Der Strom-/Spannungssensor (7) misst die elektrische Leistung, Spannung und/oder Stromstärke des Hydraulikmotors (234). Dabei wird die elektrische Leistungsaufnahme des Hydraulikmotors (234) für Bewegungen der Plattform (21) entgegen der Schwerkraft bestimmt. Diese berechnet sich aus dem Produkt der Motorenspannung (75), welcher der Fahrzeugspannung entspricht, mit dem Motorstrom (74), welcher sich am einfachsten ebenfalls mittels Spannungsmessung indirekt aus dem Spannungsabfall an der Motorenzuleitung ermitteln lässt, insbesondere dem Spannungsabfall in der Minusleitung (73). Es ist auch möglich nur den Motorenstrom (74) zu bestimmen, da die Motorenspannung (75) bekannt und konstant ist. Die Messung des Spannungsabfalls erfolgt bevorzugt an einer Motorzuleitung, vorzugsweise der Minusleitung (73). Dazu ist beispielsweise eine zusätzliche elektrische Leitung von der Steuerelektronik (22) an den Batterie-Minuspol (72) zu verlegen, um so die Potentialdifferenz zum Systemnullpunkt (71) der Hubladebühne (2) messen zu können. Oft ist der Batterie-Minuspol (72) eines LKW (9) direkt bei der Batterie mit dem Fahrzeugchassis elektrisch verbunden, sodass anstelle einer zusätzlichen Leitung zum Batterie-Minuspol (72) das Spannungspotential am Fahrzeugchassis abgegriffen werden kann.

Dabei wird mindestens ein, bevorzugt mehrere Strom-/Spannungssensoren (7) eingesetzt. Mit Hilfe des Strom-/Spannungssensors (7)
- kann bestimmt werden, ob die Plattform (21) beladen ist, indem bei Bewegungen entgegen der Schwerkraft die aktuelle Leistungsaufnahme des Hydraulikmotors (234) ermittelt und mit Referenzwerten der leeren Plattform (21) verglichen wird. Diese Leistungsaufnahme ist beim Heben einer Last proportional dem Gesamtgewicht der Last inklusive dem Gewicht der leeren Plattform (21). Beim Aufneigen einer Last ist die Leistungsaufnahme proportional der Summe von zwei Lastmomenten, nämlich jener der leeren Plattform (21) plus jener der zusätzlichen Beladung. Da die Referenzwerte für Gewicht und Lastmoment der leeren Plattform (21) konstant sind und einfach ermittelt und in der Steuerelektronik (22) gespeichert werden können, z.B. während der ersten Inbetriebnahme der Hubladebühne (2), kann das Lastmoment resp. das Gewicht der sich auf der Plattform (21) befindlichen Last durch einfache Subtraktion der Referenzwerte berechnet werden. Ergibt die Berechnung ein Gewicht von beispielsweise mehr als 30 kg, insbesondere von mehr als 60 kg, gilt die Plattform (21) als beladen. Sinngemäss gilt beim Lastmoment ein Gewicht von beispielsweise mehr als 30 kg, insbesondere von mehr als 60 kg und einem Schwerpunktsabstand von 1 m zur Ladekante resp. dem fahrzeugnahen Ende der horizontal gestellten Plattform (21) diese ebenfalls als beladen.
- kann das Gewicht auf der Plattform (21) bestimmt werden, indem die Hydraulikventile (235) der Hubzylinder (231) geöffnet, die Plattform (21) vertikal nach oben bewegt und mittels Strom-/Spannungssensor (7) die Leistung des Hydraulikmotors (234) gemessen wird,
- kann das Lastmoment bestimmt werden, indem die Hydraulikventile der Neigezylinder (232) geöffnet und die Plattform (21) nach oben aufgeneigt und mittels Strom-/ Spannungssensor (7) die Leistung des Hydraulikmotors (234) gemessen wird, und
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen, indem der Strom-/Spannungssensors (7) die Leistungsaufnahme des Hydraulikmotors (234) misst, wobei zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden, wobei bei einer plötzlichen Änderung der Messwerte und/oder bei einer Abweichung des Messwerte-Verlaufes gegenüber dem Verlauf der Referenzwerte die Bewegung der Plattform (21) gestoppt wird.

In einer bevorzugten Ausführungsform misst der Strom-/Spannungssensor (7) die aktuelle Leistung des Hydraulikmotors (234) und ist am Hydraulikmotor (234) oder dessen elektrischer Zuleitung angeordnet. Dabei werden bevorzugt zwei Spannungssensoren für die Motorspannung (75) und den Spannungsabfall (73) eingesetzt, welche vorzugsweise an der Minuszuleitung des Hydraulikmotors (234), welcher den Motorstrom (74) abbildet, angeordnet sind. Dabei stellt das Produkt der Motorspannung (75) und des Spannungsabfalls über der Motorzuleitung (73) die Motorleistung dar.

Umfasst das Sensorpaket (B) mindestens einen Strom-/Spannungssensor (7), wird bevorzugt auch mindestens ein weiterer, optionaler Sensor (8), insbesondere ein Temperatursensor (81), eingesetzt, um die Temperatur, insbesondere die Umgebungstemperatur, zu messen. Dadurch kann beispielsweise der Motorzuleitungswiderstand genauer bestimmt werden, da der Spannungsabfall (73) am Motorzuleitungswiderstand, welcher mittels Strom-/Spannungssensor (7) ermittelt wird, temperaturabhängig ist. Auch der Innenwiderstand und somit die Leistungsfähigkeit der Fahrzeugbatterie ist stark von der Temperatur abhängig. Die Viskosität des Hydrauliköls hängt ebenfalls von der Temperatur ab, sodass insgesamt die Leistungsaufnahme des Hydraulikmotors (234) durch das aktuelle Klima resp. die Umgebungstemperatur mitbestimmt wird. Wenn diese Information der Steuerelektronik (22) bekannt ist, kann der Einfluss der Temperatur auf alle temperaturabhängigen Messwerte rechnerisch berücksichtigt werden, was zu genaueren Ergebnissen führt und den Einfluss extremer Temperaturunterschiede von Sommer und Winter auf die Sicherheitsfunktionen reduziert.

Geeignete Strom-/Spannungssensoren (7) sind dem Fachmann bekannt und im Handel erhältlich.

In einer weiteren bevorzugten Ausführungsform des Systems (1) und des Verfahrens sind die Hydraulikventile (235) des Hydrauliksystems (23) als on/off Magnet-Ventile (235a) und somit nicht als Proportional- oder Stetig-Ventile ausgebildet, und werden mittels Pulsweitenmodulation (PWM) gesteuert. Dabei sind die on/off Magnet-Ventile (235a) bevorzugt an den Neigezylinder (232) und/oder Hubzylinder (231) angeordnet und die zu erzielende Bewegungsgeschwindigkeit der Plattform (21) wird mittels Inertialsensor (5) überwacht. Dabei sind die Magnet-Ventile (235a) bevorzugt an den Hydraulikzylindern (231, 232) angeordnet, können sich aber auch an beliebig anderer Stelle innerhalb des zu steuernden Ölkreislaufs befinden. Dabei muss mindestens ein Bewegungssignal des Sensorpakets (B) der zu steuernden Bewegung zugeordnet sein.

Mittels Pulsweitenmodulation (PWM) der Hydraulikventile (235) in Form von Magnet-Ventilen (235a) können diese mit der Steuerelektronik (22) so angesteuert werden, dass die Neigungsgeschwindigkeit der Plattform (21) begrenzt und/oder auf einen gemäss Bewegungsberechtigung vordefinierten Wert, d.h. auf einen Wert von maximal dem in der Bewegungsberechtigung hinterlegten Wert, bevorzugt höchstens 3°/s, abgebremst wird.

Somit können die Bewegungsabläufe der Plattform (21) mittels Pulsweitenmodulation (PWM) gezielt gesteuert werden. Hierzu werden bevorzugt Daten des Inertialsensors (5), des Drucksensors (6) wie auch des Strom-/ Spannungssensors (7) verwendet.

### Das Verfahren

Das erfindungsgemässe Verfahren zum sicheren Bedienen von Hubladebühnen (2) von LKWs mit dem erfindungsgemässen System (1) umfasst
i) das Lokalisieren der mobilen Fernbedienung (3) mittels der Multi-Zonen-Lokalisierung (A) und Bestimmen des Abstands der Fernbedienung (3) zu mindestens einem Nahbereichssensor (4) mittels Senden und Empfangen, insbesondere mittels mehrmaligem Senden und Empfangen, von Signalen zwischen der Fernbedienung (3) und den Nahbereichssensoren (4), sowie Bestimmen der Bewegungsberechtigungen der Plattform (21) der Hubladebühne (2), und
ii) gegebenenfalls das Bestimmen mittels Sensorpaket (B) ob die Plattform (21) beladen ist, wobei mittels Inertialsensor (5) die Beschleunigung, der Winkel, die Winkelgeschwindigkeit und die Eigenfrequenz der Plattform (21) bestimmt wird,
wobei die Steuerelektronik (22) so konfiguriert wird, dass die Bedienzonen Z1 bis Z5 in und um den LKW (9) unterschiedliche Bewegungsberechtigungen der Plattform (21) aufweisen.

Mit dem erfindungsgemässen Verfahren wird mittels Multi-Zonen-Lokalisierung (A) zur Bestimmung der Bewegungsberechtigungen der Plattform (21) mindestens
- eine erste für den Bediener sichere Zone Z1 bestimmt, in welcher eine uneingeschränkte Bedienung der Plattform (21) erlaubt ist, wobei die Zone Z1 eine Maximaldistanz D1, beispielsweise von 0.5 bis 1 m, zu mindestens einem Nahbereichssensor (4) aufweist,
- gegebenenfalls eine zweite Zone Z2 bestimmt, welche den Bereich der in waagrechter Position angeordneten Plattform (21), nicht aber den Bereich auf der Plattform (21) selbst, sowie den daran seitlich und nach hinten angrenzenden Raum mit einer Maximaldistanz D2, beispielsweise von 1m bis 2 m, zum Plattformende umfasst. Dabei umfasst die Zone Z2 nicht die Zonen Z1 und Z5.
- eine dritte Zone Z3 als maximalen Arbeitsbereich bestimmt wird, in welcher eine eingeschränkte Bedienung erlaubt ist, wobei die Zone Z3 eine Maximaldistanz D3, und typischerweise eine Minimaldistanz D3, zu mindestens einem Nahbereichssensor (4) aufweist, wobei die Maximaldistanz D3 grösser ist als die Maximaldistanz D2 und die Minimaldistanz D3 der Maximaldistanz D2 entspricht. Dabei umfasst die Zone Z3 nicht die Zonen Z1, Z2 und Z5,
- eine vierte Zone Z4 alles ausserhalb der Zone Z3 umfasst, wo keine Bedienung der Plattform (21) erlaubt ist, und
- eine fünfte Zone Z5 bestimmt wird, die ausschliesslich den Bereich auf der Plattform (21) umfasst, in welcher, gegebenenfalls mittels Sensorpaket (B), die Plattform (21) als beladen oder leer erkannt wird. Bei geschlossener, d.h. vertikal angeordneter, Plattform (21) tendiert die Zone Z5 somit gegen null. Falls die Steuerelektronik (22) den Bediener sowohl in Zone Z5 als auch in Zone Z2 detektiert, werden die Bewegungsberechtigungen der Zone Z5 zugeordnet,
wobei aufgrund der jeweiligen Zonen Z1 bis Z5, sowie gegebenenfalls des mittels Inertialsensor (5) bestimmten aktuellen Plattformwinkels, die zonen-spezifischen, vordefinierten Bewegungsberechtigungen, insbesondere die maximale Winkelgeschwindigkeit, beispielsweise 4°/sec, und der max. Neigungswinkel, beispielsweise +/-10°, nicht überschritten werden. Die Zone Z2 kann auch in die Zone Z3 integriert sein, sodass die Zone Z3 den Bereich der Zone Z2 mitumfasst.

In einer bevorzugten Ausführungsform des erfindungsgemässen Verfahrens wird mittels Drucksensors (6) das auf der Plattform (21) befindliche Gewicht gemessen und dessen Lastmoment bestimmt, und/oder mittels Strom-/Spannungssensor (7) die elektrische Leistung, die Spannung (75) und/oder Stromstärke (74) des Hydraulikmotors (234) bestimmt, wobei der Strom vorzugsweise indirekt über den Spannungsabfall an der Minusleitung (73) des Hydraulikmotors (234) gemessen wird.

In einer anderen bevorzugten Ausführungsform des Verfahrens wird mittels Sensorpaket (B) bestimmt, ob die Plattform (21) beladen ist, wobei
- Mittels Inertialsensor (5) und/oder Drucksensor (6) und/oder Strom-/Spannungssensor (7) ermittelt wird, ob auf der Plattform (21) ein Gewicht ist, und falls ja,
- Mittels Inertialsensor (5) die Eigenfrequenz der Plattform (21) ermittelt wird, wodurch das Lastmoment und gegebenenfalls der Ort, wo sich das Gewicht befindet, erhalten wird,
- Das Gewicht bestimmt wird, indem
   o Das Hydraulikventil (235) mindestens eines Hubzylinders (231) geöffnet und der Öldruck mittels Drucksensor (6) gemessen wird, und/oder
   o Das Hydraulikventil (235) der Hubzylinder (231) geöffnet, die Plattform (21) vertikal nach oben bewegt und mittels Strom-/ Spannungssensor (7) die Leistung des Hydraulikmotors (234) gemessen wird, und/oder
- Das Lastmoment bestimmt wird, indem
   o Das Hydraulikventil (235) mindestens eines Neigezylinders (232) geöffnet und der Öldruck mittels Drucksensor (6) gemessen wird,
   o Das Hydraulikventil (235) der Neigezylinder (232) geöffnet und die Plattform (21) nach oben aufgeneigt, d.h. eine Schliess- und/oder Aufneigebewegung erfolgt, und mittels Strom-/Spannungssensor (7) die Leistung des Hydraulikmotors (234) gemessen wird, und/oder
   ∘ Die Eigenfrequenz der Plattform (21) mit dem Inertialsensor (5) bestimmt wird.

In einer weiteren bevorzugten Ausführungsform des Verfahrens wird mittels Sensorpaket (B) bestimmt, ob beim Bewegen der, insbesondere leeren, Plattform (21) ein Körperteil, insbesondere ein Körperteil des Bedieners, und/oder ein Gegenstand eingeklemmt wird, wobei beim Bewegen, d.h. beim Heben, Senken, Öffnen und/oder Schliessen, der Plattform (21) mittels
- Inertialsensor (5) die Winkel-Beschleunigung, Winkelgeschwindigkeit und der Winkel, insbesondere der Neigungswinkel, der Plattform (21),
- Drucksensor (6) der Druck der Hydraulikleitungen (233) bei geöffnetem Hydraulikventil (235) des Neigezylinders (232), und/oder
- Strom-/Spannungssensor (7) die Leistungsaufnahme des Hydraulikmotors (234)
zunächst Referenzwerte der leeren Plattform (21) ermittelt werden, und anschliessend bei jedem weiteren Heben, Senken, Öffnen oder Schliessen der Plattform (21) die aktuell gemessenen Werte mit den erwarteten Referenzwerten verglichen werden, wobei bei einer plötzlichen Änderung der Messwerte und/oder bei einer vordefinierten Abweichung des Messwerte-Verlaufes über den vorgegebenen Toleranzwert gegenüber dem Verlauf der Referenzwerte die Bewegung der Plattform (21) gestoppt wird.

Dadurch kann die Plattform (21), wenn sie beim Bewegen einen Körperteil des Bedieners oder einen Gegenstand einklemmt, mittels Steuerelektronik (22) sofort gestoppt werden, wodurch Unfälle vermieden werden können. Daher wird dieser Effekt auch «Einklemmschutz» genannt. Überraschenderweise reagiert das Sensorpaket (B) in Bezug auf den Effekt «Einklemmschutz» beim gefährlichen Schliessvorgang mit leerer Plattform (21) äusserst sensibel, sodass ein Druck auf den eingeklemmten Körperteil oder Gegenstand von weniger als beispielsweise 30 kg, insbesondere von weniger als 10 kg, wirken, bevor die Plattform (21) gestoppt wird. Mit der Angabe in kg ist hier die äquivalente Gewichtskraft senkrecht zur Erdoberfläche gemeint, welche dieses Gewicht auf einen Körperteil ausüben würde, welche bei 10 kg einer Kraft von ca. 100 Newton entspricht.

Der Einklemmschutz ist auch anwendbar beim Hebevorgang, hier besteht eine Gefahr für die Füsse des Bedieners, kurz bevor die Plattform (21) die obere Endstellung auf Höhe der Ladefläche erreicht und sich der Abstand zwischen der fixen Gummileiste und der Plattform (21) bis auf null reduziert, wenn der Endanschlag erreicht ist. Beim Heben einer schweren Last, die je nach Nennlast der Hubladebühne bis 1000 kg oder noch mehr betragen kann, reagiert der Einklemmschutz möglicherweise erst bei 100 kg, also zu wenig sensibel, um zuverlässig beispielsweise Füsse oder Zehen schützen zu können, besonders wenn die gefährdete Person keine Stahlkappenschuhe trägt. Für diesen Fall wird beispielsweise vorgeschlagen, die Gummileiste als Schaltleiste auszuführen und deren Schaltkontakt mit der Steuerelektronik (22) zu verbinden, damit diese die Bewegung der Plattform (21) stoppt, wenn auf die Schaltleiste resp. Gummileiste von unten eine Kraft von mehr als 5 kg einwirkt.

Wenn der Einklemmschutz anspricht und die Bewegung der Plattform (21) stoppt, wird zusätzlich vorgeschlagen, den Druck im Hydrauliksystem (23) mittels der Hydraulikventile (235) sofort zu entlasten, ohne jedoch den Hydraulikmotor (234) einzuschalten, indem beispielsweise für kurze Zeit, vorzugsweise 0.3 s bis maximal 1 s die Plattform (21) automatisch in die entgegengesetzte Richtung bewegt wird, bevor sie dann endgültig stoppt. Dadurch kann ein soeben eingeklemmtes Körperteil resp. Gegenstand mühelos befreit werden, ohne dass zuerst ein weiterer Bedienereingriff notwendig ist. Zusätzlich schlagen wir aus Sicherheitsüberlegungen vor, dass die Steuerelektronik (22) jene Bewegungsrichtung der Plattform (21), welche den Einklemmschutz ausgelöst hat, während einer Zeit von etwa 1 s sperrt, sodass dieselbe Bewegungsrichtung erst dann fortgesetzt werden kann, wenn vorgängig während mindestens 1 s an der mobilen Fernbedienung (3) keine Taste mehr betätigt wurde.

In einer anderen bevorzugten Ausführungsform des Verfahrens werden mittels Inertialsensor (5) des Sensorpakets (B) und der Steuerelektronik (22) die Bewegungsabläufe der Plattform (21) gezielt gesteuert, wobei
- die Hydraulikventile (235) des Hydrauliksystems (23) als on/off Magnet-Ventile (235a) ausgebildet und bevorzugt an den Neigezylinder (232) und/oder Hubzylinder (231) angeordnet werden,
- Gemäss Anspruch 10 ermittelt wird, ob die Plattform (21) beladen ist, und wenn ja,
- Die Hydraulikventile (235) mittels Pulsweitenmodulation (PWM) durch die Steuerelektronik (22) so angesteuert werden, dass die Neigungsgeschwindigkeit der Plattform (21) begrenzt und/oder auf einen gemäss Bewegungsberechtigung vordefinierten Wert, insbesondere auf einen Wert von maximal dem in der Bewegungsberechtigung vorgängig hinterlegten Wert, beispielsweise höchstens 3°/s, abgebremst wird, sowie
- Die Hydraulikventile (235) und der Hydraulikmotor (234) durch die Steuerelektronik (22) so angesteuert werden, dass die Bewegung der Plattform (21) stoppt, sobald der Neigungswinkel der Plattform (21) den gemäss Bewegungsberechtigung vordefinierten Wert, bevorzugt +/-10°, übersteigt.

Diese Ausführungsform wird auch «Plattformbremse» genannt.

Beansprucht wird zudem auch das System (1) zum sicheren Bedienen von Hubladebühnen (2) von LKWs erhältlich nach dem erfindungsgemässen Verfahren.

### Die Verwendung

Verwendung des erfindungsgemässen Systems (1) und des erfindungsgemässen Verfahrens zum sicheren Bedienen von Hubladebühnen (2) von LKWs.

Eine besonders bevorzugte Verwendung des Systems (1) umfasst die Multi-Zonen-Lokalisierung (A), d.h. die Lokalisation der mobilen Fernbedienung (3) und somit auch zur Lokalisierung des Bedieners. Bewegt sich der Bediener in einer unsicheren, d.h. Unfall-gefährdeten Zone, erlaubt das System (1) die Bedienung der Plattform (21) einzuschränken oder ganz - insbesondere sofort - zu stoppen.

Eine weitere bevorzugte Verwendung des Systems (1) umfasst die Bestimmung des Gewichts auf der Plattform (21) und des darauf befindlichen Lastmoments.

Eine andere bevorzugte Verwendung des Systems (1) umfasst den Einklemmschutz, d.h. das sofortige Stoppen der Plattform (21), wenn diese einen Körperteil und/oder einen Gegenstand einklemmt.

Eine wiederum andere bevorzugte Verwendung des Systems (1) umfasst die Plattformbremse, mit welcher die Plattform (21) gezielt gesteuert und notfalls gestoppt werden kann.

Somit führen die erfindungsgemässen Verwendungen zu einer deutlich erhöhten Sicherheit für Personen und Güter und einer stark reduzierten Unfallwahrscheinlichkeit. Ein flüssiger und natürlicher Arbeitsablauf wird unterstützt, was wertvolle Zeit spart und die Arbeitszufriedenheit erhöht.

Es werden folgende Bezugszeichen verwendet:
- 1: System
- 2: Hubladebühne
21 Plattform
22 Steuerelektronik
23 Hydrauliksystem
231 Hubzylinder
232 Neigezylinder
233 Hydraulikleitungen
234 Hydraulikmotor
235 Hydraulikventile
235a Magnet-Ventile
235a-HZ Magnet-Ventile Hubzylinder
235a-NZ Magnet-Ventile Neigezylinder
235-WV Wegeventil
236 Drosselventil
- 3: mobile Fernbedienung
- 4: Nahbereichssensoren (4) der Multi-Zonen-Lokalisierung (A)
- 5: Inertialsensor (5) des Sensorpakets (B)
- 6: Drucksensor (6) des Sensorpakets (B)
- 7: Strom-/Spannungssensor (7) des Sensorpakets (B)
71 Systemnullpunkt
72 Batterie-Minuspol
73 Spannungsabfall-Minusleitung
74 Motorstrom
75 Motorspannung
- 8: Optionale Sensoren
81 Temperatursensor
82 Schaltleiste
- 9: LKW
91 Koffer (91) des LKW (9)
92 Fahrerhaus (92) des LKW (9)
- Z1: Zone 1
- Z2: Zone 2
- Z3: Zone 3
- Z4: Zone 4
- Z5: Zone 5

Im Folgenden werden nicht-limitierende, bevorzugte Ausführungsformen des erfindungsgemässen Systems (1) mit der Multi-Zonen-Lokalisierung und/oder einem Sensorpaket anhand der nachfolgenden Zeichnungen beschrieben. Diese sind nicht einschränkend auszulegen und werden als Bestandteil der Beschreibung verstanden:

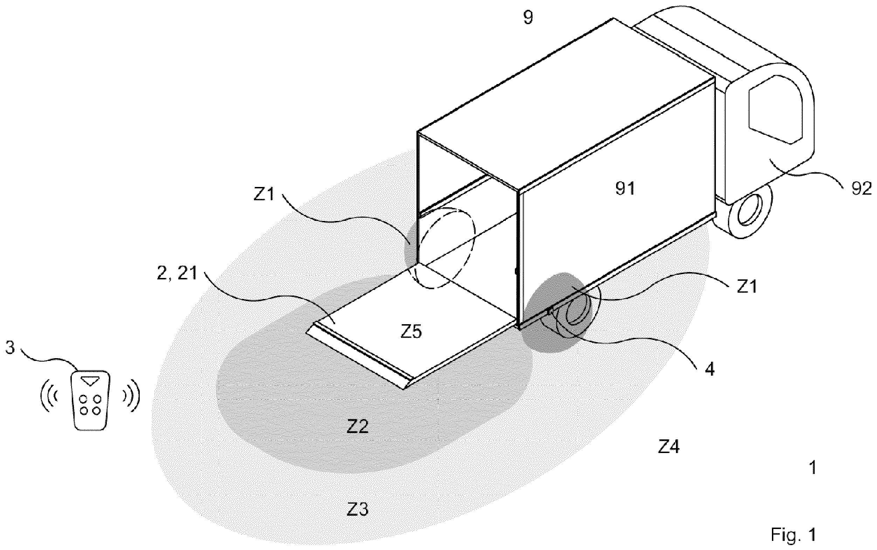

- Fig. 1: offenbart einen LKW (9) mit Hubladebühne (2), Kofferaufbau (91), Fahrerhaus (92) und offener, horizontal positionierter Plattform (21) auf Höhe der Ladefläche, also im oberen Endanschlag der Gummileiste. Es werden fünf Bedienzonen Z1, Z2, Z3, Z4 und Z5 der Zonenlokalisierung (A) unterschieden, wo sich der Bediener mit der mobilen Fernbedienung (3) aufhalten kann. Die Zonen Z1, Z2, Z3, Z4 und Z5 können mittels der Nahbereichssensoren (4) ermittelt werden, wobei die Zone Z5 mittels optionalem Inertialsensor (5) noch genauer bestimmt werden kann.

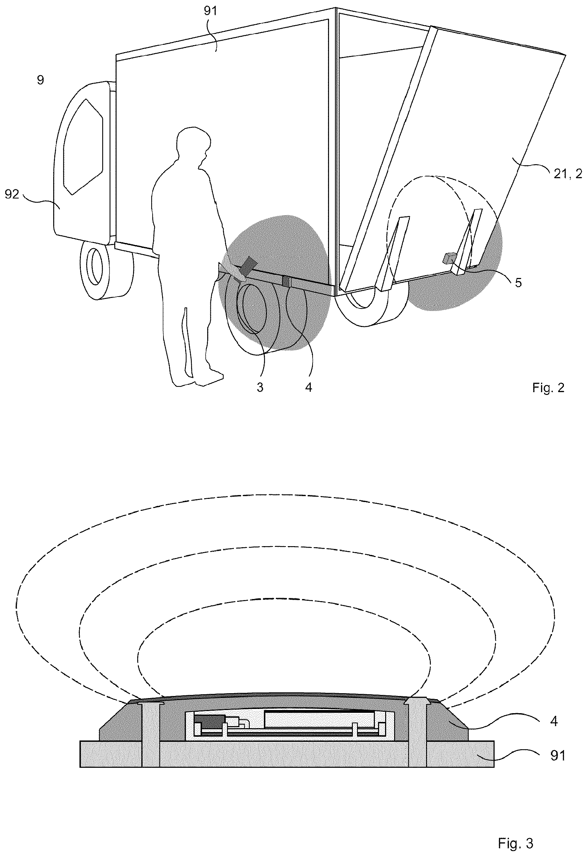

- Fig. 2: zeigt einen LKW (9) mit einem Kofferaufbau (91), dem Fahrerhaus (92) und einer Hubladebühne (2) mit nicht ganz geschlossener Plattform (21), sowie einer Bedienperson mit mobiler Fernbedienung (3) in der Zone Z1, auch Nahbereichszone Z1 genannt, des linksseitigen Nahbereichssensors (4). An der Aussenseite der Plattform (21) ist im unteren Bereich der Inertialsensor (5) montiert. Die Nahbereichszone Z1, ausgehend von den beiden Nahbereichssensoren (4) ist beispielhaft symmetrisch auf beiden Seiten des LKW-Hecks vorhanden und ist aufgrund der Richtcharakteristik der beiden Nahbereichssensoren (4) beidseitig des Koffers (91) hauptsächlich nach aussen gerichtet. Wenn sich der LKW-Fahrer im Fahrerhaus (92) befindet, darf dieser mit der mobilen Fernbedienung (3) die Plattform (21) nicht bewegen können.
- Fig. 3: zeigt den Schnitt des als Patchantenne ausgeführten flachen Nahbereichssensor (4), welcher unten am Kofferaufbau (91) des LKWs (9) montiert ist. Die gestrichelten Linien symbolisieren die halbkreis- bzw. halbkugelförmige Richtcharakteristik des Sensors (4) bzw. im konkreten Fall der Patchantenne.

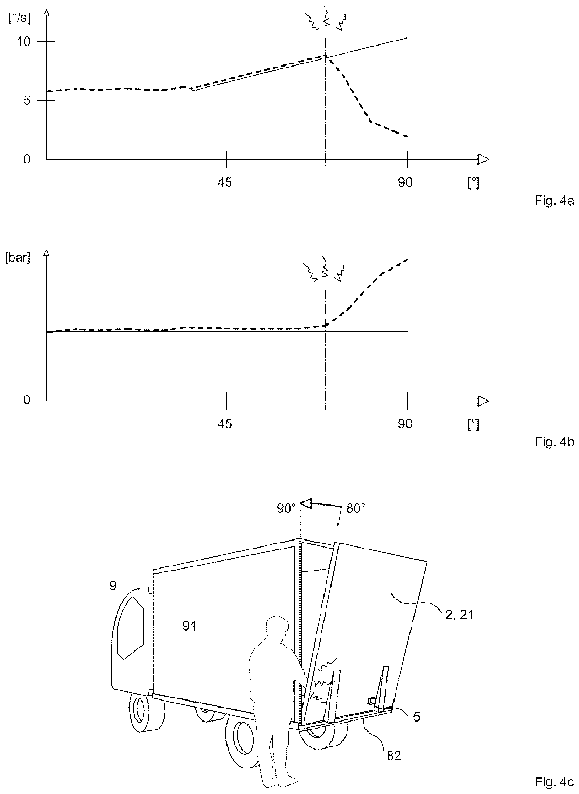

- Fig. 4a: zeigt beispielhaft einen möglichen Verlauf der Winkelgeschwindigkeit einer leeren Plattform (21), gemessen mit dem Inertialsensor (5) während dem Schliessvorgang. Die durchgehende Linie stellt den erwarteten Referenzverlauf und die gestrichelte Linie den effektiv aktuell gemessenen Verlauf dar. Trifft die Plattform (21) auf ein Hindernis, wird die Winkelgeschwindigkeit sofort deutlich abgebremst und die Differenz zum Referenzwert übersteigt einen Toleranzwert.
- Fig. 4b: zeigt beispielhaft einen möglichen Verlauf des Hydraulikdrucks einer leeren Plattform (21), gemessen mit dem Drucksensor (6) während dem Schliessvorgang. Die durchgehende Linie stellt den erwarteten Referenzverlauf und die gestrichelte Linie den effektiv aktuell gemessenen Verlauf dar. Trifft die Plattform (21) auf ein Hindernis, steigt der Druck in den Hydraulikleitungen (233) sofort deutlich an und die Differenz zum Referenzverlauf übersteigt einen Toleranzwert.
- Fig. 4c: zeigt die gefährliche Situation beim Schliessvorgang in dem Moment, wo die Plattform (21) auf das Hindernis auftrifft, hier einen Arm des Bedieners, der zwischen dem Koffer (91) eingeklemmt wird. Der Inertialsensor (5) registriert dabei kleinste Plattformbewegungen. Eine Schaltleiste (82) schützt den Bediener bei der vertikalen Hubbewegung der horizontal gestellten Plattform (21), wenn Zehen oder die Füsse eingeklemmt werden.
- Fig. 5: zeigt schematisch den Zusammenhang zwischen der FahrzeugElektrik, der Sensorik (A, B) und der Hydraulik (23). Insbesondere ist hier dargestellt, wie mit dem Strom-/Spannungssensor (7) die Leistung des Hydraulikmotors (234) ermittelt werden kann, indem der Motorstrom (74) einen Spannungsabfall (73) an der Minusleitung hervorruft und die Motorspannung (75) über die Spannungsversorgung der Steuerelektronik (22) ermittelt wird. Der elektrische Systemnullpunkt (71) der Hubladebühne (2) resp. der Steuerelektronik (22) befindet sich beim Hydraulikmotor (234) und unterscheidet sich um den Spannungsabfall (73) auf der Minus-Motorzuleitung vom Fahrzeug-Massepotential des Batterie-Minuspols (72). Es wird auch gezeigt, wie mittels Pulsweitenmodulation (PWM) sowohl die Magnet-Ventile (235a-HZ) der Hubzylinder (231) wie auch die Magnet-Ventile (235a-NZ) der Neigezylinder (232) angesteuert werden und wie der Inertialsensor (5) die daraus resultierenden Bewegungen der Plattform (21) der Steuerelektronik (22) rückmeldet. Auch der Drucksensor (6) an den Hydraulikleitungen (233) sowie die optionalen Sensoren (8) des Sensorpakets (B) sind dargestellt. Die mobile Fernbedienung (3) kommuniziert mittels der Nahbereichssensoren (4) der Zonenlokalisierung (A) mit der Steuerelektronik (22), die mittels Magnetventil den Hydraulikmotor (234) ein- oder ausschaltet sowie weitere Magnetventile (235a) des Hydrauliksystems (23) ansteuert.

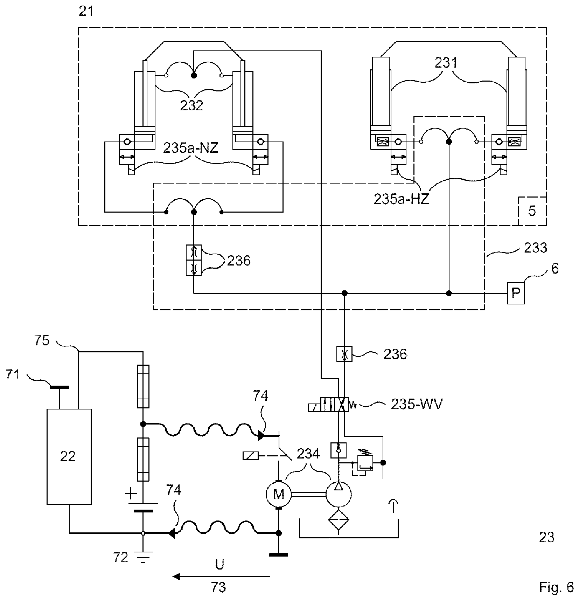

- Fig. 6: zeigt beispielhaft eine mögliche Ausführungsform des Hydrauliksystems (23) von Hubladebühnen (2) der vorliegenden Erfindung. Dargestellt werden hier insbesondere der Zwischenkreis der Hydraulikleitungen (233), wo der Drucksensor (6) vorteilhafterweise angeordnet wird sowie ein Drosselventil (236) am Ausgang des Zwischenkreises (233) bei der Flussrichtung hin zum Hydrauliköltank. Die elektrische Seite des Hydraulikmotors (234) treibt eine Hydraulikpumpe an, die das Hydrauliköl unter hohem Druck über die Hydraulikleitungen (233) des Zwischenkreises an die beiden Hubzylinder (231) sowie an die beiden Neigezylinder (232) leiten kann. Mit dem Wegeventil (235-WV) kann die Flussrichtung des Hydrauliköls und damit die Bewegungsrichtung der Plattform (21) umgeschaltet werden. Das Drosselventil (236) begrenzt die maximal mögliche Bewegungsgeschwindigkeit der Plattform (21), indem es den Öldurchfluss bei Bewegungen der Plattform (21) entgegen der Schwerkraft verlangsamt, sodass es möglich wird, am Drucksensor (6) überhaupt einen Druck messen zu können. Die Plattform (21) wird vertikal nach oben bewegt, wenn der Hydraulikmotor (234) eingeschaltet, das Wegeventil (235-WV) in der gezeichneten Ruhestellung ist und die Magnetventile (235a-HZ) geöffnet sind, sodass das Hydrauliköl in die Hubzylinder (231) strömt und die Plattform (21) antreibt. Die Plattform (21) wird nach oben aufgeneigt resp. in Schliessrichtung bewegt, wenn der Hydraulikmotor (234) eingeschaltet, das Wegeventil (235-WV) in der gezeichneten Ruhestellung ist und die Magnetventile (235a-NZ) geöffnet sind, sodass das Hydrauliköl in die Neigezylinder (232) strömt und die Plattform (21) antreibt. Für Bewegungen der Plattform (21) mit der Schwerkraft muss das Wegeventil (235-WV) eingeschaltet werden, zusätzlich müssen auch die Magnetventile (235a) der zu bewegenden Hydraulikzylinder (231, 232) eingeschaltet werden.
Der Stromkreis des Hydraulikmotors (234) mit dem Spannungsabfall in der Minusleitung (73) aufgrund des Motorstroms (74) sind hier ebenfalls dargestellt. Die Steuerelektronik (22) misst zudem die Motorspannung (75) gegenüber dem Systemnullpunkt (71), der sich vom Potential am Batterie-Minuspol (72) um den Spannungsabfall (73) an der Motorzuleitung unterscheidet.

## Patentansprüche

1. System (1) zum sicheren Bedienen von Hubladebühnen (2) von LKWs, umfassend einen LKW (9) mit Koffer (91), einem mittels Hubladebühne (2) schliessbaren Ladebereich sowie eine mobile Fernbedienung (3), wobei die Hubladebühne (2) eine Plattform (21), eine Steuerelektronik (22) und ein Hydrauliksystem (23) mit Hubzylinder (231), Neigezylinder (232), Hydraulikleitungen (233), Hydraulikmotor (234) sowie Hydraulikventilen (235) umfasst, **dadurch gekennzeichnet, dass** das System (1)
- eine Multi-Zonen-Lokalisierung (A) aufweist zur Bestimmung von Bewegungsberechtigungen der Plattform (21) mittels Lokalisation der mobilen Fernbedienung (3), umfassend mindestens zwei Nahbereichssensoren (4) zum Empfangen und Senden von Signalen von und zur mobilen Fernbedienung (3), wobei an jeder Seite des hinteren Bereichs des LKW (9) ein Nahbereichssensor (4) angeordnet ist, wobei die Nahbereichssensoren (4) an den einander gegenüberliegenden Seitendes LKW-Koffers (91) angeordnet sind, und die Nahbereichssensoren (4) so ausgewählt werden, dass die Dämpfung der Signalleistung der Nahbereichssensoren (4) zur LKW-Seite im Richtdiagramm um mindestens 6 dB höher ist als in die entgegengesetzte Richtung, und
- gegebenenfalls ein Sensorpaket (B) umfasst zur Bestimmung, ob die Plattform (21) beladen ist, wobei das Sensorpaket (B) einen Inertialsensor (5) umfasst, welcher an der Plattform (21) angeordnet ist, und die Steuerelektronik (22) mit den Nahbereichssensoren (4) und gegebenenfalls dem Inertialsensor (5) verbunden ist, um die von den Sensoren (4, 5) empfangenen Signale in der Steuerelektronik (22) zu verarbeiten,
wobei die Steuerelektronik (22) so konfiguriert ist, dass die Multi-Zonen-Lokalisierung (A) mittels Lokalisation der mobilen Fernbedienung (3) den Raum in und um den LKW (9) in verschiedene Bedienzonen Z mit unterschiedlichen Bewegungsberechtigungen der Plattform (21) unterteilt, wobei mindestens
- eine erste für den Bediener sichere Zone Z1, in welcher eine uneingeschränkte Bedienung der Plattform (21) erlaubt ist, wobei die Zone Z1 eine Maximaldistanz D1 zu mindestens einem Nahbereichssensor (4) aufweist,
- gegebenenfalls eine zweite Zone Z2, welche den Bereich der in waagrechter Position angeordneten Plattform (21), sowie den daran seitlich und nach hinten angrenzenden Raum mit einer Maximaldistanz D2 zum Plattformende umfasst, wobei die Zone Z2 die Zonen Z1, Z3 und Z5 nicht umfasst,
- eine dritte Zone Z3 als maximalen Arbeitsbereich, in welcher eine eingeschränkte Bedienung erlaubt ist, wobei die Zone Z3 eine Maximaldistanz D3 zu mindestens einem Nahbereichssensor (4) aufweist, wobei die Zone Z3 die Zonen Z1, Z2 und Z5 nicht umfasst,
- eine vierte Zone Z4 alles ausserhalb den Zonen Z1, Z2, Z3 und Z5 umfasst, in welcher keine Bedienung der Plattform (21) erlaubt ist, und
- eine fünfte Zone Z5, die ausschliesslich den Bereich auf der Plattform (21) umfasst, in welcher, gegebenenfalls mittels eines Sensorpakets (B), erkannt wird, ob die Plattform (21) beladen oder leer ist,
wobei aufgrund der jeweiligen Bedienzonen Z1 bis Z5, sowie gegebenenfalls des mittels Inertialsensor (5) bestimmten aktuellen Plattformwinkels, die zonen-spezifischen, vordefinierten Bewegungsberechtigungen der Plattform, insbesondere deren maximaler Winkelgeschwindigkeit und Neigungswinkel, nicht überschritten werden.

2. System (1) nach Anspruch 1, **dadurch gekennzeichnet, dass** das Sensorpaket (B) zudem
b1) einen an den Hydraulikleitungen (233) des Hydrauliksystems (23) angeordneten Drucksensor (6) zur Bestimmung des auf der Plattform (21) befindlichen Gewichts und dessen Lastmoments,
b2) einen Strom-/Spannungssensor (7) zur Bestimmung der elektrischen Leistung, Spannung (75) und/oder Stromstärke (74) des Hydraulikmotors (234), und/oder
b3) mindestens einen weiteren optionalen Sensor (8), beispielsweise einen Temperatursensor,
umfasst,
wobei die Steuerelektronik (22) mit dem Drucksensor (6) und/oder dem Strom-/ Spannungssensor (7) verbunden ist, um die von den Sensoren (6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen, was die Bestimmung, ob die Plattform (21) beim Bewegen einen Gegenstand einklemmt, und/oder das gezielte Steuern der Bewegungsabläufe der Plattform (21) erlaubt.

3. System (1) nach Anspruch 1 oder 2, **dadurch gekennzeichnet, dass** die Nahbereichssensoren (4) der Multi-Zonen-Lokalisierung (A)
- 0 bis 1.5 m, bevorzugt 0.3 m bis 1 m, gemessen in horizontaler Richtung, von der Heckkante des LKW (9) beabstandet sind,
- am seitlichen, unteren Bereich des LKW-Koffers (91) angeordnet sind, wobei der Koffer (91) bevorzugt als Reflektor für die Signalübertragung zwischen den Nahbereichssensoren (4) und der mobilen Fernbedienung (3) ausgebildet ist, und/oder
- in Form von Patchantennen vorliegen, besonders wenn diese auf Metall montiert sind.

4. System (1) nach mindestens einem der Ansprüche 1 bis 3, **dadurch gekennzeichnet, dass** der Inertialsensor (5) an der Plattform (21) an einer vor Beschädigung gut geschützten Stelle aussen im unteren Teil der Plattform, oder an ähnlicher Stelle innen in einem Hohlraum der Plattform, angeordnet ist.

5. System (1) nach mindestens einem der Ansprüche 2 bis 4, **dadurch gekennzeichnet, dass**
i) der Drucksensor (6) in einem Zwischenkreis der Hydraulikleitungen (233) des Hydrauliksystems (23) angeordnet ist, wobei
- der Zwischenkreis bevorzugt die Neige- wie auch die Hubzylinder (232, 231) speist, und/oder
- das Hydrauliksystem (23) mindestens ein Drosselventil (236) aufweist, welches sich bevorzugt in der rückseitigen Flussrichtung hin zum Hydrauliköltank befindet,
und/oder
ii) der Strom-/Spannungssensor (7) die aktuelle Leistung des Hydraulikmotors (234) misst und am Hydraulikmotor (234) oder dessen elektrischer Zuleitung angeordnet ist.

6. System (1) nach mindestens einem der Ansprüche 1 bis 5, **dadurch gekennzeichnet, dass** die mobile Fernbedienung (3)
- mit der Steuerelektronik (22), bevorzugt über die Nahbereichssensoren (4), mittels Funkwellen, Ultraschallwellen, Magnetwellen und/oder Lichtwellen kommuniziert, und/oder
- einen mehrachsigen Inertialsensor aufweist.

7. System (1) nach mindestens einem der Ansprüche 1 bis 6, **dadurch gekennzeichnet, dass** die Hydraulikventile (235) des Hydrauliksystems (23) als on/off Magnet-Ventile (235a) und somit nicht als Proportional- oder Stetig- Ventile ausgebildet sind, und mittels Pulsweitenmodulation (PWM) gesteuert sind, wobei die on/off Magnet-Ventile (235a) bevorzugt an den Neigezylinder (232) und/oder Hubzylinder (231) angeordnet sind und die zu erzielende Bewegungsgeschwindigkeit der Plattform (21) mittels Inertialsensor (5) überwacht wird.

8. Verfahren zum sicheren Bedienen von Hubladebühnen (2) von LKWs mit dem System (1) nach mindestens einem der Ansprüche 1 bis 7, umfassend
iii) das Lokalisieren der mobilen Fernbedienung (3) mittels der Multi-Zonen-Lokalisierung (A) und Bestimmen des Abstands der Fernbedienung (3) zu mindestens einem Nahbereichssensor (4) mittels Senden und Empfangen von Signalen zwischen der Fernbedienung (3) und den Nahbereichssensoren (4), sowie Bestimmen der Bewegungsberechtigungen der Plattform (21) der Hubladebühne (2), und
iv) gegebenenfalls das Bestimmen mittels Sensorpaket (B) ob die Plattform (21) beladen ist, wobei mittels Inertialsensor (5) die Beschleunigung, der Winkel, die Winkelgeschwindigkeit und die Eigenfrequenz der Plattform (21) bestimmt wird,
wobei die Steuerelektronik (22) so konfiguriert wird, dass die Bedienzonen Z1 bis Z5 in und um den LKW (9) unterschiedliche Bewegungsberechtigungen der Plattform (21) aufweisen.

9. Verfahren nach Anspruch 8, wobei mittels Drucksensors (6) das auf der Plattform befindliche Gewicht gemessen und dessen Lastmoment bestimmt wird, und/oder mittels Strom-/Spannungssensor (7) die elektrische Leistung, die Spannung (75) und/oder Stromstärke (74) des Hydraulikmotors (234) bestimmt wird, wobei der Strom vorzugsweise indirekt über den Spannungsabfall an der Minusleitung (73) des Hydraulikmotors (234) gemessen wird.

10. Verfahren nach Anspruch 9, wobei mittels Sensorpaket (B) bestimmt wird, ob die Plattform (21) beladen ist, **dadurch gekennzeichnet, dass**
- Mittels Inertialsensor (5) und/oder Drucksensor (6) und/oder Strom-/Spannungssensor (7) ermittelt wird, ob auf der Plattform (21) ein Gewicht ist, und falls ja,
- Mittels Inertialsensor (5) die Eigenfrequenz der Plattform (21) ermittelt wird, wodurch das Lastmoment und gegebenenfalls der Ort, wo sich das Gewicht befindet, erhalten wird,
- Das Gewicht bestimmt wird, indem
o Das Hydraulikventil (235) mindestens eines Hubzylinders (231) geöffnet und der Öldruck mittels Drucksensor (6) gemessen wird, und/oder
o Die Hydraulikventile (235) der Hubzylinder (231) geöffnet, die Plattform (21) vertikal nach oben bewegt und mittels Strom-/Spannungssensor (7) die Leistung des Hydraulikmotors (234) gemessen wird, und/oder
- Das Lastmoment bestimmt wird, indem
o Das Hydraulikventil (235) mindestens eines Neigezylinders (232) geöffnet und der Öldruck mittels Drucksensor (6) gemessen wird,
o Das Hydraulikventil (235) der Neigezylinder (232) geöffnet und die Plattform (21) nach oben aufgeneigt und mittels Strom-/ Spannungssensor (7) die Leistung des Hydraulikmotors (234) gemessen wird, und/oder
o Die Eigenfrequenz der Plattform (21) mit dem Inertialsensor (5) bestimmt wird.

11. Verfahren nach Anspruch 8 bis 10, wobei mittels Sensorpaket (B) bestimmt wird, ob beim Bewegen der, insbesondere leeren, Plattform ein Körperteil und/oder ein Gegenstand eingeklemmt wird, **dadurch gekennzeichnet, dass** beim Bewegen der Plattform (21) mittels
- Inertialsensor (5) die Winkel-Beschleunigung, Winkelgeschwindigkeit und der Winkel der Plattform (21),
- Drucksensor (6) der Druck der Hydraulikleitungen (233) bei geöffnetem Hydraulikventil (235) des Neigezylinders (232), und
- Strom-/Spannungssensor (7) die Leistungsaufnahme des Hydraulikmotors (234)
zunächst Referenzwerte der leeren Plattform (21) ermittelt werden, und anschliessend bei jedem weiteren Heben, Senken, Öffnen oder Schliessen der Plattform (21) die gemessenen aktuellen Werte mit den erwarteten Referenzwerten verglichen werden, wobei bei einer plötzlichen Änderung der Messwerte und/oder bei einer Abweichung des Messwerte-Verlaufes über den vorgegebenen Toleranzwert gegenüber dem Verlauf der Referenzwerte die Bewegung der Plattform (21) gestoppt wird.

12. Verfahren nach Anspruch 8 bis 11, wobei mittels Inertialsensor (5) des Sensorpakets (B) und der Steuerelektronik (22) die Bewegungsabläufe der Plattform (21) gezielt gesteuert werden, **dadurch gekennzeichnet, dass**
- die Hydraulikventile (235) des Hydrauliksystems (23) als on/off Magnet-Ventile (235a) ausgebildet und bevorzugt an den Neigezylinder (232) und/oder Hubzylinder (231) angeordnet werden,
- Gemäss Anspruch 11 ermittelt wird, ob die Plattform (21) beladen ist, und wenn ja,
- Die Hydraulikventile (235) mittels Pulsweitenmodulation (PWM) durch die Steuerelektronik (22) so angesteuert werden, dass die Neigungsgeschwindigkeit der Plattform (21) begrenzt und/oder auf einen gemäss Bewegungsberechtigung vordefinierten Wert abgebremst wird, sowie
- Die Hydraulikventile (235) und der Hydraulikmotor (234) durch die Steuerelektronik (22) so angesteuert werden, dass die Bewegung der Plattform (21) stoppt, sobald der Neigungswinkel der Plattform (21) den gemäss Bewegungsberechtigung vordefinierten Wert übersteigt.

13. System (1) zum sicheren Bedienen von Hubladebühnen (2) von LKWs erhältlich nach dem Verfahren nach mindestens einem der Ansprüche 8 bis 12.

14. Verwendung des Systems (1) nach mindestens einem der Ansprüche 1 bis 8 und 13 zum sicheren Bedienen von Hubladebühnen (2) von LKWs.

## Claims

1. System (1) for the safe operation of platform lifts (2) of lorries, comprising a lorry (9) with a cargo container (91), a loading area that can be closed by means of a platform lift (2) as well as a mobile remote control (3), wherein the platform lift (2) comprises a platform (21), control electronics (22) and a hydraulic system (23) with a lifting cylinder (231), a tilt cylinder (232), hydraulic lines (233), a hydraulic motor (234) and hydraulic valves (235), **characterized in that** the system (1)
- comprises a multi-zone localization (A) for determining movement permissions of the platform (21) by means of localization the mobile remote control (3), comprising at least two short-range sensors (4) for receiving and transmitting signals to and from the mobile remote control (3), wherein a short-range sensor (4) is arranged on each side of the rear area of the lorry (9), wherein the short-range sensors (4) are arranged on the opposite sides of the lorry cargo container (91), and the short-range sensors (4) are selected in such a way that the attenuation of the signal power of the short-range sensors (4) to the lorry side in the directional diagram is at least 6 dB higher than in the opposing direction, and,
- where applicable, comprises a sensor package (B) to determine whether the platform (21) is loaded, wherein the sensor package (B) comprises an inertial sensor (5) which is arranged on the platform (21), and the control electronics (22) are connected to the short-range sensors (4) and, where applicable, are connected to the inertial sensor (5) in order to process the signals received from the sensors (4, 5) in the control electronics (22),
wherein the control electronics (22) are configured in such a way that the multi-zone localization (A) divides the space in and around the lorry (9) into different control zones Z with different movement permissions of the platform (21) by means of localization of the mobile remote control (3), wherein these zones comprise at least
- one first safe zone Z1 for the operator, in which unrestricted operation of the platform (21) is permitted, wherein zone Z1 comprises a maximum distance D1 from at least one short-range sensor (4),
- where applicable, a second zone Z2, which comprises the area of the platform (21) arranged in a horizontal position, as well as the adjacent space to it to the side and rear with a maximum distance D2 from the end of the platform, wherein the zone Z2 does not comprise the zones Z1, Z3 and Z5,
- a third zone Z3 as the maximum working area in which limited operation is permitted, wherein the zone Z3 has a maximum distance D3 from at least one short-range sensor (4), wherein the zone Z3 does not comprise zones Z1, Z2 and Z5,
- a fourth zone Z4 comprises everything outside zones Z1, Z2, Z3 and Z5 in which no operation of the platform (21) is permitted, and
- a fifth zone Z5, which comprises only the area on the platform (21) in which it is detected, where applicable, by means of a sensor package (B), whether the platform (21) is loaded or empty,
wherein, due to the respective operating zones Z1 to Z5, as well as, where applicable, the current platform angle determined by means of an inertial sensor (5), the zone-specific, predefined movement permissions of the platform, in particular, its maximum angular speed and angle of inclination cannot be exceeded.

2. The system (1) according to Claim 1, **characterized in that** the sensor package (B) also comprises
b1) a pressure sensor (6) located on the hydraulic lines (233) of the hydraulic system (23) to determine the weight on the platform (21) and its load torque;
b2) a current/voltage sensor (7) to determine the electrical power, voltage (75) and/or current strength (74) of the hydraulic motor (234), and/or
b3) at least one other optional sensor (8), such as a temperature sensor,
wherein the control electronics (22) are connected to the pressure sensor (6) and/or the current/voltage sensor (7) in order to process the signals received from the sensors (6, 7, 8) in the control electronics (22) and to control and monitor the movements of the platform (21) in a targeted manner by controlling the hydraulic valves (235) and the hydraulic motor (234), which makes it possible to determine f if the platform (21) traps an object when moving and/or allows the targeted control of the movement sequences of the platform (21).

3. The system (1) according to Claim 1 or 2, **characterized in that** the short-range sensors (4) of the multi-zone localization (A)
- are spaced at a way from the rear edge of the lorry (9) by 0 to 1.5 m, preferably 0.3 m to 1 m, measured horizontally,
- are arranged on the side, lower area of the lorry cargo container (91), wherein the cargo container (91) is preferably designed as a reflector for signal transmission between the short-range sensors (4) and the mobile remote control (3), and/or
- exist in the form of patch antennas, particularly if they are mounted on metal.

4. The system (1) according to at least one of the Claims 1 to 3, **characterized in that** the inertial sensor (5) on the platform (21) is arranged in a place well protected from damage on the outside of the lower part of the platform, or in a similar place on the inside of a cavity of the platform.

5. The system (1) according to at least one of the Claims 2 to 4, **characterized in that**
i) the pressure sensor (6) is arranged in an intermediate circuit of the hydraulic lines (233) of the hydraulic system (23), wherein:
- the intermediate circuit preferably powers the tilting as well as the lifting cylinders (232, 231), and/or
- the hydraulic system (23) comprises at least one throttle valve (236), which is preferably located in the rear flow direction towards the hydraulic oil tank,
and/or
ii) the current/voltage sensor (7) measures the current power of the hydraulic motor (234) and is arranged on the hydraulic motor (234) or its electrical supply line.

6. The system (1) according to at least one of the Claims 1 to 5, **characterized in that** the mobile remote control (3)
- communicates with the control electronics (22), preferably via the short-range sensors (4), by means of radio waves, ultrasonic waves, magnetic waves and/or light waves, and/or
- comprises a multi-axis inertial sensor.

7. The system (1) according to at least one of the Claims 1 to 6, **characterized in that** the hydraulic valves (235) of the hydraulic system (23) are designed as on/off solenoid valves (235a) and thus not as proportional or proportional servo valves, and are controlled by means of pulse width modulation (PWM), wherein the on/off solenoid valves (235a) are preferably arranged on the tilt cylinders (232) and/or lifting cylinders (231) and the movement speed of the platform (21) to be achieved is monitored by means of an inertial sensor (5).

8. Method for safely operating platform lifts (2) of lorries with the system (1) according to at least one of the Claims 1 to 7, comprising
iii) the localization of the mobile remote control (3) by means of multi-zone localization (A) and determining the distance of the remote control (3) to at least one short-range sensor (4) by transmitting and receiving signals between the remote control (3) and the short-range sensors (4), as well as determining the movement permissions of the platform (21) of the platform lift (2), and
iv) where applicable, determining by means of a sensor package (B) whether the platform (21) is loaded, wherein, by means of an inertial sensor (5), the acceleration, angle, angular speed and natural frequency of the platform (21) are determined;
wherein the control electronics (22) are configured in such a way that the control zones Z1 to Z5 in and around the lorry (9) have different movement permissions of the platform (21).

9. The method according to Claim 8, wherein, by means of a pressure sensor (6), the weight on the platform and its load torque are determined, and/or, by means of a current/voltage sensor (7), the electrical power, voltage (75) and/or current strength (74) of the hydraulic motor (234) are determined, wherein the current is measured preferably indirectly via the voltage drop at the negative lead (73) of the hydraulic motor (234).

10. The method according to Claim 9, wherein, by means of a sensor package (B), it is determined whether the platform (21) is loaded, **characterized in that**,
- by means of an inertial sensor (5) and/or a pressure sensor (6) and/or current/voltage sensor (7), it is determined whether there is a weight on the platform (21) and, if so,
- the natural frequency of the platform (21) is determined by means of an inertial sensor (5), which obtains the load torque and, where applicable, the location of the weight,
- the weight is determined by
∘ opening the hydraulic valve (235) of at least one lifting cylinder (231) and the oil pressure is measured by means of a pressure sensor (6), and/or
∘ by opening the hydraulic valves (235) of the lifting cylinders (231), moving the platform (21) vertically upwards and, by means of a current/voltage sensor (7), the power of the hydraulic motor (234) is measured, and/or
- the load torque is determined by
∘ opening the hydraulic valve (235) of at least one tilt cylinder (232) and the oil pressure is measured by means of a pressure sensor (6),
∘ opening hydraulic valve (235) of the tilt cylinder (232) and tilting the platform (21) upwards and, by means of a current/voltage sensor (7), the power of the hydraulic motor (234) is measured and/or
∘ the natural frequency of the platform (21) is determined using the inertial sensor (5).

11. The method according to Claims 8 to 10, wherein, by means of a sensor package (B), it is determined whether a body part and/or an object is trapped when moving the platform, in particular, when it is empty, is **characterized in that**, when moving the platform (21),
- by means of an inertial sensor (5), the angular acceleration, angular speed and angle of the platform (21) are determined,
- by means of a pressure sensor (6), the pressure of the hydraulic lines (233) is determined when the hydraulic valve (235) of the tilt cylinder (232) is open, and
- by means of a current/voltage sensor (7), the hydraulic motor power consumption (234) is determined.
Initially, reference values pertaining to the empty platform (21) are determined, and then, with each further lifting, lowering, opening or closing of the platform (21), the measured current values are compared with the expected reference values, wherein the movement of the platform (21) is stopped in the event of a sudden change in the measured values and/or in the event of a deviation of the measured values above the specified tolerance value compared to the course of the reference values.

12. The method according to Claims 8 to 11, wherein the movement sequences of the platform (21) are specifically controlled by means of an inertial sensor (5) of the sensor package (B) and the control electronics (22), **characterized in that**
- the hydraulic valves (235) of the hydraulic system (23) are designed as on/off solenoid valves (235a) and preferably arranged on the tilt cylinders (232) and/or lifting cylinders (231)
- according to Claim 11, it is determined whether the platform (21) is loaded, and if so,
- the hydraulic valves (235) are controlled by the control electronics (22) by means of pulse width modulation (PWM) in such a way that the inclination speed of the platform (21) is delimited and/or decelerated to a predefined value according to the movement permission, and
- the hydraulic valves (235) and the hydraulic motor (234) are controlled by the control electronics (22) in such a way that the movement of the platform (21) stops as soon as the angle of inclination of the platform (21) exceeds the predefined value according to the movement permission.

13. System (1) for the safe operation of platform lifts (2) of lorries obtainable in accordance with the method according to at least one of the Claims 8 to 12.

14. Use of the system (1) according to at least one of the Claims 1 to 8 and 13 for the safe operation of platform lifts (2) of lorries.

## Revendications

1. Système (1) pour la manipulation fiable de hayons élévateurs (2) de camions, comprenant un camion (9) avec un coffre (91), une zone de chargement pouvant être fermée au moyen d'un hayon élévateur (2) ainsi qu'une télécommande mobile (3), sachant que le hayon élévateur (2) comprend une plateforme (21), un système de commande électronique (22) et un système hydraulique (23) avec un vérin hydraulique (231), un vérin d'inclinaison (232), des conduites hydrauliques (233), un moteur hydraulique (234), ainsi que des vannes hydrauliques (235), **caractérisé en ce que** le système (1)
- comporte une localisation multizones (A) pour la détermination des autorisations de déplacement de la plateforme (21) au moyen de la localisation de la télécommande mobile (3), comprenant au moins deux détecteurs de proximité (4) pour la réception et l'émission de signaux de et vers la télécommande mobile (3), sachant que sur chaque côté de la zone arrière du camion (9) est disposé un détecteur de proximité (4), sachant que les détecteurs de proximité (4), sont disposés aux extrémités opposées l'une à l'autre du coffre de camion (91) et les détecteurs de proximité (4) sont sélectionnés de telle manière que l'amortissement de la puissance de signal des détecteurs de proximité (4) vers le côté du camion dans le diagramme de direction est d'au moins 6 dB plus élevé que dans la direction opposée, et
- comprend le cas échéant un ensemble de capteurs (B) pour déterminer si la plateforme (21) est chargée, sachant que l'ensemble de capteurs (B) comprend un capteur inertiel (5), lequel est disposé sur la plateforme (21) et le système de commande électronique (22) est relié aux détecteurs de proximité (4) et le cas échéant au capteur inertiel (5) pour traiter les signaux reçus par les capteurs (4, 5) dans le système de commande électronique (22),
sachant que le système de commande électronique (22) est configuré de manière à ce que la localisation multizones (A) divise au moyen de la localisation de la télécommande mobile (3) l'espace dans et autour du camion (9) en zones de manutention différentes Z avec des autorisations de déplacement différentes de la plateforme (21), sachant au moins
- qu'une première zone Z1 fiable pour l'utilisateur dans laquelle une manipulation illimitée de la plateforme (21) est permise, sachant que la zone Z1 comporte une distance maximale D1 par rapport à au moins un détecteur de proximité (4),
- le cas échéant une deuxième zone Z2, laquelle comprend la zone de la plateforme (21) disposée en position horizontale ainsi que l'espace latéralement voisin de celle-ci et à l'arrière avec une distance maximale D2 de l'extrémité de plateforme, sachant que la zone Z2 ne comprend pas les zones Z1, Z3 et Z5,
- une troisième zone Z3 en tant que zone de travail maximale dans laquelle une manipulation illimitée est permise, sachant que la zone Z3 comporte une distance maximale D3 d'au moins un détecteur de proximité (4), sachant que la zone Z3 ne comprend pas les zones Z1, Z2 et Z5,
- une quatrième zone Z4 comprend tout en dehors des zones Z1, Z2, Z3 et Z5 dans laquelle aucune manipulation de la plateforme (21) n'est permise, et
- une cinquième zone Z5, qui comprend exclusivement la zone sur la plateforme (21) dans laquelle, on identifie, le cas échéant au moyen d'un ensemble de capteurs (B), si la plateforme (21) est chargée ou vide,
sachant qu'en raison des zones de manutention respectives Z1 à Z5 et le cas échéant de l'angle de plateforme réel déterminé au moyen du capteur inertiel (5), les autorisations de déplacement prédéfinies spécifiques aux zones de la plateforme, en particulier la vitesse angulaire maximale et l'angle d'inclinaison de celle-ci ne sont pas dépassés.

2. Système (1) selon la revendication 1, **caractérisé en ce que** l'ensemble de capteurs (B) comprend en outre
b1) un capteur de pression (6) disposé sur les conduites hydrauliques (233) du système hydraulique (23) pour déterminer le poids se trouvant sur la plateforme (21) et le couple de charge de celui-ci,
b2) un capteur de courant/de tension (7) pour déterminer la puissance électrique, la tension (75) et/ou l'intensité de courant (74) du moteur hydraulique (234), et/ou
b3) au moins un autre capteur en option (8), par exemple un capteur de température,
sachant que le système de commande électronique (22)est relié au capteur de pression (6) et/ou au capteur de courant/de tension (7) pour traiter les signaux reçus des capteurs (6, 7, 8) dans le système de commande électronique (22) et commander et surveiller de façon précise les déplacements de la plateforme (21) au moyen de l'activation des vannes hydrauliques (235) et du moteur hydraulique (234), ce que permet la détermination et/ou la commande de façon précise des cycles de déplacement de la plateforme (21), si la plateforme (21) coince un objet lors du déplacement.

3. Système (1) selon la revendication 1 ou 2, **caractérisé en ce que** les détecteurs de proximité (4) de la localisation multizones (A)
- sont éloignés de 0 à 1,5 m, de préférence 0,3 m à 1 m, mesuré en direction horizontale, du bord arrière du camion (9),
- sont disposés sur la zone latérale, inférieure du coffre de camion (91), sachant que le coffre (91) est constitué de préférence comme réflecteur pour la transmission de signaux entre les détecteurs de proximité (4) et la télécommande mobile (3), et/ou
- sont présents sous la forme d'antennes planaires, en particulier lorsque ceux-ci sont montés sur du métal.

4. Système (1) selon au moins l'une quelconque des revendications 1 à 3, **caractérisé en ce que** le capteur inertiel (5) est disposé sur la plateforme (21) à un endroit bien protégé contre tout endommagement à l'extérieur dans la partie inférieure de la plateforme, ou un emplacement analogue à l'intérieur dans un espace creux de la plateforme.

5. Système (1) selon au moins l'une quelconque des revendications 1 à 4, **caractérisé en ce que**
i) le capteur de pression (6) est disposé dans un circuit intermédiaire des conduites hydrauliques (233) du système hydraulique (23),
sachant que
- le circuit intermédiaire alimente de préférence les vérins d'inclinaison ainsi que les vérins de levage (232, 231), et/ou
- le système hydraulique (23) comporte au moins une vanne papillon (236), laquelle se trouve de préférence dans la direction d'écoulement à l'arrière vers le réservoir d'huile hydraulique,
et/ou
ii) le capteur de courant/de tension (7) mesure la puissance réelle du moteur hydraulique (234) et est disposé sur le moteur hydraulique (234) ou sur son conduit d'alimentation électrique.

6. Système (1) selon au moins l'une quelconque des revendications 1 à 5, **caractérisé en ce que** la télécommande mobile (3)
- communique avec le système de commande électronique (22), de préférence par le biais des détecteurs de proximité (4), au moyen d'ondes radio, d'ondes ultrasons, d'ondes magnétiques et/ou d'ondes optiques et/ou
- comporte un capteur inertiel multiaxial.

7. Système (1) selon au moins l'une quelconque des revendications 1 à 6, **caractérisé en ce que** les vannes hydrauliques (235) du système hydraulique (23) sont constituées sous la forme de vannes magnétiques Marche/Arrêt (235a) et ne sont pas de ce fait des vannes proportionnelles ou en continu et sont commandées au moyen de la modulation de largeur d'impulsion (MLI), sachant que les vannes magnétiques Marche/Arrêt (235a) sont disposées de préférence sur le vérin d'inclinaison (232) et/ou vérin de levage (231) et la vitesse de déplacement à atteindre de la plate-forme (21) est contrôlée au moyen du capteur inertiel (5).

8. Procédé pour la manipulation fiable de hayons élévateurs (2) de camions avec le système (1) selon au moins l'une quelconque des revendications 1 à 7 comprenant
iii) la localisation de la télécommande mobile (3) au moyen de la localisation multizones (A) et détermination de la distance de la télécommande (3) d'au moins un détecteur de proximité (4) au moyen de l'émission et de la réception de signaux entre la télécommande (3) et les détecteurs de proximité (4), et détermination des autorisations de déplacement de la plateforme (21) du hayon élévateur (2), et
iv) le cas échéant en déterminant au moyen de l'ensemble de capteurs (B), si la plateforme (21) est chargée, sachant qu'au moyen du capteur inertiel (5) on détermine l'accélération, l'angle, la vitesse angulaire et la fréquence propre de la plateforme (21),
sachant que le système de commande électronique (22) est configuré de telle manière que les zones de manutention Z1 à Z5 comportent des autorisations de déplacement différentes de la plateforme (21) dans et autour du camion (9) .

9. Procédé selon la revendication 8, sachant qu'au moyen du capteur de pression (6) on mesure le poids se trouvant sur la plateforme et on détermine son couple de charge, et/ou on détermine au moyen du capteur de courant/de tension (7), la puissance électrique, la tension (75) et/ou l'intensité de courant (74) du moteur hydraulique (234), sachant que le courant est mesuré de préférence indirectement par la chute de tension sur le conducteur négatif (73) du moteur hydraulique (234).

10. Procédé selon la revendication 9, sachant qu'au moyen de l'ensemble de capteurs (B), il est déterminé, si la plateforme (21) est chargée, **caractérisé en ce qu'**
- au moyen du capteur inertiel (5) et/ou du capteur de pression (6) et/ou du capteur de courant/de tension (7), il est déterminé, si un poids est sur la plateforme (21) et si cela est le cas,
- au moyen du capteur inertiel (5), la fréquence propre de la plateforme (21) est déterminée, le couple de charge et le cas échéant l'endroit où se trouve le poids, étant obtenus,
- le poids est déterminé,
∘ la vanne hydraulique (235) d'au moins un vérin hydraulique (231) étant ouverte et la pression d'huile étant mesurée au moyen d'un capteur de pression (6), et/ou
∘ les vannes hydrauliques (235) des vérins hydrauliques (231) étant ouvertes, la plateforme (21) étant verticalement déplacée vers le haut et la puissance du moteur hydraulique (234) étant mesurée au moyen du capteur de courant/de tension (7), et/ou
- le couple de charge est déterminé,
∘ la vanne hydraulique (235) d'au moins un vérin d'inclinaison (232) étant ouverte et la pression d'huile mesurée au moyen du capteur de pression (6),
∘ la vanne hydraulique (235) d'au moins un vérin d'inclinaison (232) étant ouverte et la plateforme (21) inclinée vers le haut et la puissance du moteur hydraulique (234) étant mesurée au moyen du capteur de courant/ de tension (7), et/ou
∘ la fréquence propre de la plateforme (21) étant déterminée avec le capteur inertiel (5) .

11. Procédé selon les revendications 8 à 10, sachant qu'au moyen de l'ensemble des capteurs (B), il est déterminé, si lors du déplacement de la plateforme, en particulier vide, une partie de corps et/ou un objet est coincé, **caractérisé en ce que** lors du déplacement de la plateforme (21), sont d'abord déterminées des valeurs de référence de la plateforme vide (21), au moyen
- du capteur inertiel (5), l'accélération angulaire, la vitesse angulaire et l'angle de la plateforme (21),
- du capteur de pression (6), la pression des conduites hydrauliques (233) avec la vanne hydraulique (235) ouverte du vérin d'inclinaison (232), et
- du capteur de courant/de tension (7), la puissance absorbée du moteur hydraulique (234)
et les valeurs réelles mesurées sont ensuite comparées à chaque autre levage, abaissement, ouverture ou fermeture de la plateforme (21) aux valeurs de référence attendues, sachant que lors d'une modification soudaine des valeurs de mesure et/ou lors d'un écart du profil des valeurs de mesure au-delà de la valeur de tolérance prédéfinie par rapport au profil des valeurs de référence, le déplacement de la plateforme (21) est arrêté.

12. Procédé selon les revendications 8 à 11, sachant qu'au moyen du capteur inertiel (5) de l'ensemble de capteurs (B) et du système de commande électronique (22), les cycles de déplacement de la plateforme (21) sont commandés de façon précise, **caractérisé en ce que**
- les vannes hydrauliques (235) du système hydraulique (23) sont constituées sous la forme de vannes magnétiques Marche/Arrêt (235a) et sont disposées de préférence sur le vérin d'inclinaison (232) et/ou vérin de levage (231),
- il est déterminé selon la revendication 11, si la plateforme (21) est chargée et si oui,
- les vannes hydrauliques (235) sont activées au moyen de la modulation de largeur d'impulsion (MLI) par le système de commande électronique (22) de telle manière que la vitesse d'inclinaison de la plateforme (21) est limitée et/ou freinée à une valeur prédéfinie selon l' autorisation de déplacement, et
- les vannes hydrauliques (235) et le moteur hydraulique (234) sont activés par le système de commande électronique (22) de telle manière que le déplacement de la plateforme (21) s'arrête dès que l'angle d'inclinaison de la plateforme (21) dépasse la valeur prédéfinie selon l' autorisation de déplacement.

13. Système (1) pour la manipulation fiable de hayons élévateurs (2) de camions, accessible selon le procédé selon au moins l'une quelconque des revendications 8 à 12.

14. Utilisation du système (1) selon au moins l'une quelconque des revendications 1 à 8 et 13 pour la manipulation fiable de hayons élévateurs (2) de camions.
